# EUROPÄISCHE PATENTSCHRIFT

(11) **EP 3 341 627 B1**
(45) Veröffentlichungstag und Bekanntmachung des Hinweises auf die Patenterteilung: **25.09.2019**
(21) Anmeldenummer: 16763442.7
(22) Anmeldetag: 23.08.2016
(51) Int. Cl.: E04B 1/98, F16F 7/10

(54) **SCHWINGUNGSTILGER MIT ROTIERENDER MASSE**
VIBRATION ABSORBER HAVING A ROTATING MASS
AMORTISSEUR DE VIBRATIONS PRÉSENTANT UNE MASSE ROTATIVE

(30) Priorität: 28.08.2015 EP 15002549
(43) Veröffentlichungstag der Anmeldung: 04.07.2018
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2016/001421
(87) Internationale Veröffentlichungsnummer: WO 2017/036581

(56) Entgegenhaltungen:
- EP-A1- 0 834 035
- EP-A1- 2 746 483
- EP-A1- 2 746 483
- WO-A1-97/00403
- JP-U- H04 101 838
- JP-U- H04 101 838

## Beschreibung

Die Erfindung betrifft einen neuartigen Schwingungstilger für die Dämpfung von Schwingungen von Bauwerken oder Maschinenanlagen mit einer Eigenfrequenz von vorzugsweise < 1 Hz, vorzugsweise < 0.5 Hz, insbesondere, < 0.25 Hz, wie sie beispielsweise in Windkraftanlagen oder auch anderen hohen schlanken Bauwerken oder Anlagen auftreten können. Die Erfindung betrifft insbesondere einen Schwingungstilger, welcher neben einer an sich festeingestellten Hauptmasse, die entlang einer Pendelmasse analogen oder ähnlichen Bahn bewegt wird, eine wesentlich kleinere variabel einstellbare rotierende Schwungmasse aufweist, die sich mit der Hauptmasse auf deren Bahn bewegt und mit deren Hilfe die Frequenz des Tilgers feineingestellt bzw. adaptiert werden kann. Die Erfindung betrifft ferner auch Anordnungen und Kombinationen von derartigen Schwingungstilgern mit unterschiedlichen Schwingungscharakteristik sowie ihre Verwendung in insbesondere Windkraftanlagen, und schließlich Windkraftanlagen selbst, welche derartige Schwingungstilger und Schwingungstilgeranordnungen aufweisen.

Hohe und schlanke Gebäude und Anlagen unterliegen besonderen Schwingungsverhältnissen, welche durch technische Maßnahmen beachtet werden müssen, damit keine Schäden oder vorzeitige Ermüdungsprozesse eintreten. Dies gilt insbesondere für Windkraftanlagen, die aufgrund ihrer rasanten technischen Weiterentwicklung in den letzten Jahren vermehrt auch in extremeren Gegenden (z.B. Offshore) und Höhen eingesetzt werden, und zudem immer höhere Türme aufweisen, um die dort besseren Windverhältnisse auszunutzen. Solche Windkraftanlagen müssen den an ihnen durch Wind, Wellen, Wetter und Betrieb auftretenden Kräften Stand halten, welche die Anlagen an unterschiedlichen Stellen verschieden stark belasten. Insbesondere Schwingungskräfte können den Betrieb und die Sicherheit der Anlagen gefährden. Es ist also notwendig die in diesen Anlagen auftretenden Schwingungen durch technische Maßnahmen gezielt und wirksam zu dämpfen. Dies geschieht mit Schwingungstilgern oder Schwingungsdämpfern unterschiedlicher Konstruktion entsprechend der diversen unterschiedlichen Einsatzfelder.

So gibt es zum Beispiel Anlagen, bei denen kritische Schwingungen nur durch die sogenannte Karmannsch'e Wirbel-Anregung ein Problem darstellt. Da der drehende Rotor in der Regel eine sehr gute Dämpfung der Windkraftanlage bewirkt, treten derartige Wirbel nur im Stillstand auf. Aufgrund der Dämpfung der im Stillstand quer zum Wind stehenden Rotorblätter kann eine solche Anlage nur in Längsrichtung angeregt werden. Da die Anregung durch Karmannsch'e Wirbel 90° zur Windrichtung erfolgt, tritt dieser Fall nur in Querrichtung auf, und zwar nur, wenn die Anlage der Windrichtung nicht nachfährt. Bei solchen Anlagen reicht es deshalb aus, wenn ein Schwingungstilger nur im Stillstand der Anlage arbeitet.

Natürlich schwingen Windkraftanlagen auch im Betrieb quer zu Rotorachse. In diese Richtung ist die Dämpfung durch den Rotor sehr gering, so dass insbesondere bei sehr hohen Türmen auch eine zusätzliche Dämpfung durch Schwingungstilger in Querrichtung erforderlich ist.

Weiterhin gibt es Anlagen, welche im Meer aufgebaut sind und durch Wellenanregung in allen Richtungen zum Schwingen angeregt werden. Während des Betriebes reagieren solche Anlagen aufgrund des nur in axialer Richtung durch Wind gedämpften Rotors vor allem durch senkrecht zur Windrichtung bewegte Wellen. Deshalb werden dort Schwingungstilger auch während des Betriebes der Anlage, welche quer zur Rotorachse wirken notwendig. Aufgrund dessen, dass solche Anlagen auch im Stillstand in alle Richtungen angeregt werden, werden von Fall zu Fall auch Schwingungstilger benötigt, welche in Rotorrichtung und quer zu Rotorrichtung wirken.

Weiterhin gibt es Anregungen, welche durch das Drehen des Rotors angeregt werden. Das sind zum einen Anregungen durch den Rotor beim Durchfahren der Turm-Eigenfrequenz. Ebenso werden Türme durch Rotorfrequenzen angeregt, welche nahe an der Turm-Eigenfrequenz liegen.

Somit gibt es mehrere unterschiedliche Aufgaben für Schwingungstilger entsprechend der Anregungsfrequenzen, einige seien hier genannt: (i) Schwingungstilger in axialer Richtung im Stillstand, (ii) Schwingungstilger in Querrichtung im Stillstand und Betrieb, (iii) Schwingungstilger in der horizontalen Ebene im Stillstand, und (iv) Schwingungstilger in der horizontalen Ebene im Stillstand und Betrieb. Die meisten Störkräfte wirken sich auch auf den Turm der Anlage aus, welcher in der Regel mit einer niedrigen Eigenfrequenz meist < 1Hz zum Schwingen angeregt wird. Aus diesem Grund werden im Stand der Technik oft Pendeltilger zur Schwingungsdämpfung eingesetzt, welche meist im Turm aufgehängt werden.

Pendeltilger für Windkraftanlagen sind beispielsweise in der EP 1008747 (B1) oder in der WO 2009/068599 beschrieben. Hier werden klassische Pendel verwendet, welche aber auf Grund des verfügbaren geringen Bewegungsraumes im Turm nur kleine Schwingwege zurücklegen können, was zur Folge hat, dass die erforderlichen Tilgermassen recht groß sein müssen, um Einfluss auf die entsprechende Eigenfrequenz nehmen zu können. Dem zu begegnen, wurden platzsparender Lösungen vorgeschlagen.

So ist aus der JP 08-200438 (A) ein Schwingungstilger bekannt, welcher eine Tilgemasse umfasst, die mit Rollen ausgestattet ist und auf diesen auf einer konkav nach innen gekrümmten kreisförmigen Schienenanordnung hin und her rollen kann, wobei sich die Masse de facto wie die Masse eines virtuellen Pendels mit einer dem Kreisradius entsprechenden Pendelstange oder Pendelseil bewegt. Während die grobe Einstellung auf die Eigenfrequenz durch die grobe Konfiguration des Systems (Masse, Schienenausmaße, Länge etc.) festgelegt wird, kann eine Feinabstimmung der Eigenfrequenz bei diesem System nur durch Veränderung der der Schienenkrümmung erfolgen, was technisch sehr aufwendig sein dürfte, und in manchen Fällen gar nicht möglich ist.

In der EP 2746483 (A1) wird ein ebenfalls einer Pendelbewegung nachempfundener Rolltiger für eine Windkraftanlage vorgestellt, bei dem eine ggf. variable Tilgermasse auf einer Rad-Schienen-Anordnung aus einer Mittellage heraus durch Rückstellkräfte, insbesondere Federkräfte, verlagerbar ist. Die Tilgermasse-Schienen-Anordnung ist dabei innerhalb eines umgebenden Rahmengestells angeordnet, wobei die vorgesehene Höhenverstellung in diesem Gestell für die gewünschte Feinabstimmung der Frequenz sorgt, da die Höhenverstellung physikalisch einer Veränderung der Länge des virtuellen Pendels bewirkt. Abgesehen davon, dass die gesamte Vorrichtung relativ sperrig ist und immer noch Platzprobleme in einigen Bereichen der Windkraftanlage verursachen sollte, ist die Veränderung bzw. Anpassung der Frequenz durch Anheben oder Absenken der schweren Tilgemasse, die bei einer Windkraftanlage etwa 500 - 5000 kg betragen kann, doch recht schwierig zu vollziehen.

Daher ist es insbesondere für die Dämpfung von Eigenfrequenzen unter 5 HZ, insbesondere unter 1 Hz in Windkraftanlagen oder ähnlichen hohen und schlanken Anlagen oder Gebäuden als Aufgabe anzusehen, einen Schwingungsdämpfer zur Verfügung zu stellen, welcher dem eingeschränkten verfügbaren Platz sowie der einfachen Einstellbarkeit und Anpassbarkeit der Eigenfrequenz an die örtlichen und betrieblichen Bedingungen einer solchen Anlage unter Berücksichtigung der notwendigen relativ schweren Tilgermassen gerecht wird.

Die Aufgabe wurde durch den unten und in den Ansprüchen beschriebenen Schwingungstilger gelöst. Dabei wurde gefunden, dass der erfindungsgemäße Schwingungstilger auf Grund seines generellen neuartigen Konzeptes in unterschiedlichen Ausführungsformen zur Verfügung gestellt werden kann, wodurch die meisten der in einer Windkraftanlage oder ähnlichen Anlage auftretenden niederfrequenten Schwingungsereignisse, wie oben kurz zusammengefasst, erfolgreich gedämpft oder ganz eliminiert werden können.

### Zusammenfassung der Erfindung

Gegenstand der Erfindung ist somit ein an eine Störfrequenz variabel anpassbarer Schwingungstilger, der insbesondere für Windkraftanlagen oder Anlagen und Maschinen mit ähnlichen Schwingungseigenschaften, oder hohe schlanke Bauwerke, geeignet ist, und der ein Lauf- oder Fahrwerk (1), eine Tilger-Hauptmasse (1.1) und eine Laufvorrichtung (7) aufweist, die an einer Haltekonstruktion (3) befestigt ist oder Bestandteil derselben ist, wobei die Tilger-Hauptmasse am Fahrwerk angebracht ist oder integraler Bestandteil davon ist, und die Laufvorrichtung zumindest in ihrem mittleren Bereich im Wesentlichen konkav gekrümmt und kreisförmig ist, und das Fahrwerk (1) bzw. die Tilger-Hauptmasse (1.1) auf der konkaven Seite dieser Laufvorrichtung aus einer Mittellage oder Scheitelpunktlage heraus mittels Räder oder Rollen oder berührungslos bewegbar und verlagerbar ist entsprechend den die Bewegungen auslösenden, in Richtung der Laufvorrichtung wirksamen Schwingungskräften, wobei erfindungsgemäß das Lauf- oder Fahrwerk (1) bzw. die Tilger-Hauptmasse (1.1) (30.6) mindestens ein angetriebenes, scheibenförmiges, rotationssymmetrisches Rotationsmassenbauteil (1.5)(1.6)(30.7)(30.8) mit einer Rotationsachse senkrecht zur Ebene der gekrümmten Bahn der Laufvorrichtung aufweist, welches sich zusammen mit der Tilger-Hauptmasse bewegt, und die Rotationsrichtung der jeweiligen Richtung des bewegten Fahrwerks entlang der Laufvorrichtung entspricht, wobei das mindestens eine Rotationsmassenbauteil eine veränderbare rotierende Masse (1.6)(30.7)(30.8) aufweist, die in Abhängigkeit vom Durchmesser der rotierenden Masse oder vom Durchmesser des Massenschwerpunktes des Massenteils 1% - 30% der Tilger-Hauptmasse entspricht.

Durch Einsatz eines solchen Tilgers ist es erfindungsgemäß möglich, eine Frequenzänderung der Eigenschwingung um bis zu 30%, vorzugsweise bis 20%, insbesondere bis 10 oder 15% vorzunehmen, je nach gewählter Rotationsmasse bzw. Trägheitsmoment sowie anderen konstruktiven Eigenschaften dieser rotierenden Masse.

Erfindungsgemäß umfasst die Laufvorrichtung (7) mindestens eine, vorzugsweise zwei oder drei entsprechend geformte Laufschienen (4) oder Laufrohre (70), welche so angeordnet sind, dass das Fahrwerk (1) inklusive den beiden Massen linear in eine gewählte Richtung (abhängig von der einwirkenden Kraftrichtung) sich bewegen kann, wobei das Fahrwerk mit entsprechenden Rädern oder auch Rollen (1.2) ausgerüstet ist, die auf den Schienen laufen, welche vorzugsweise parallel in Richtung der Bewegung des Fahrwerks angeordnet sind.

Grundsätzlich können die Fahrwerke für den erfindungsgemäßen Schwingungstilger auch magnetisch gelagert werden, so dass auf Rollen verzichtet werden kann oder dass die Rollen nur bei Versagen des Magnetsystems erforderlich sind. Das Rollmoment kann mit dem magnetischen System nicht über die Antriebrollen übertragen werden, so dass zusätzliche Systeme wie Zahnstangen oder Zugketten erforderlich sind. Mit Zahnstangen oder Zugketten können deutlich höhere Drehmomente, welche unabhängig von der Reibkraft sind auf das Schwungrad übertragen werden. Damit können aufgrund der kleineren Antriebsritzel, welche das Drehmoment unabhängig von der Anpresskraft übertragen, bereits ohne zusätzliche Übersetzungsgetriebe größere Drehzahlen des Schwungrades erreicht werden. Damit sind wiederum kleinere Rotationsmassen erforderlich, oder es ist ein breiterer Frequenz-Einstellbereich möglich.

In einer bevorzugten Ausführungsform der Erfindung laufen mindestens zwei Laufräder (1.2) (80.3) (91) hintereinander angeordnet auf einer Schiene, währen mindestens ein drittes Rad auf der zweiten in Bewegungsrichtung parallel verlaufenden Schiene positioniert ist, und in der Regel als Antriebsrad (1.3) für das Rotationsmassenbauteil (1.5)(1.6) dient, mit dem es über eine Welle verbunden ist.

Alternativ kann die Laufvorrichtung (7) anstelle einer Laufschiene (4) auch ein rundes Laufrohr (70) sein, auf dem das Fahrwerk mit mindestens drei, vorzugsweise vier um das Rohr verteilten Rädern oder Rollen bewegt wird, wobei die Räder oder Rollen eine entsprechend dem Rohrprofil konkave Lauffläche besitzen, die ein Abrutschen der Räder verhindert. Bei dieser Ausführungsform sollten die Räder mit einen bestimmten Anpressdruck auf das Laufrohr gedrückt werden, was u.a. durch entsprechende Spannungsmittel erreicht werden kann. Auch bei dieser alternativen Ausführungsform, die insbesondere bei sehr wenig vorhandenen Platz geeignet ist, ist mindestens eines der Räder eine Antriebsrad, welches über eine Antriebsachse mit dem Rotationsmassenbauteil verbunden ist.

Zur sicheren Führung und Abstützung des Lauf-/ Fahrwerkes mit Rotationsmasse kann in einer weiteren Ausführungsform der Erfindung, sofern der Platzbedarf es zulässt, eine weitere Schiene (5) oder ein weiteres Rohr zur Verfügung gestellt werden, welche(s) oberhalb oder unterhalb der Laufschiene (4), vorzugsweise oberhalb, angeordnet ist, und auf der/dem ein Stützrad , das mit dem Fahrwerk verbunden ist, laufen kann. Die Laufschiene (4) kann aber auch als ein L-Element ausgeführt sein, an dessen vertikale, vorzugsweise reibungsarme Fläche sich das Laufrad (1.3) abstützen kann. Die horizontale Laufschiene (4) kann aber auch eine von ihr getrennte senkrecht zu ihr angeordnete Stütz- und Führungsschiene (5) (80.5) sein.

Zur Abstützung und zum sicheren Halt auf der Laufvorrichtung können zusätzliche Querstützräder oder -rollen (1.7) vorhanden sein, welche auf den gleichen Laufschienen oder auf dem gleichen Laufrohr vorzugsweise senkrecht zur Achse der Laufräder (1.2)(1.3) abrollen, und die Vorrichtung seitlich stützen.

Die Laufvorrichtung des erfindungsgemäßen Tilgers besitzt, wie gesagt eine zumindest im mittleren Bereich eine gekrümmte Form, vorzugsweise in Form von im Wesentlichen zur Bewegungsrichtung des Fahrwerks (1) parallel verlaufenden gekrümmten Schienen oder Laufrohren, die weitgehend der Kreisform entspricht. Die Laufvorrichtung kann insbesondere in ihren beiden Endabschnitten auch weitgehend linear sein oder eine Hyperbelform aufweisen. Das Laufprofil kann auch kreisförmig sein mit am Ende anderen Radius als im Mittelbereich. Es ist auch möglich, dass die Laufvorrichtung Laufschienen oder Laufrohre besitzt, die eine unterschiedliche Krümmung aufweisen. Dies ist dann vorteilhaft oder gar notwendig, wenn unterschiedlich große Lauf- und / oder Antriebsräder eingesetzt werden sollen, beispielsweise um weiteren Einfluss auf die Frequenzeinstellung des Tilgers nehmen zu können.

Die Länge der Laufvorrichtung, welche das Fahrwerk mit der Tilger-Hauptmasse und der Rotationsmasse durch Abrollen zurücklegen kann, kann den Platznotwendigkeiten in der Anlage angepasst sein. Für Windkraftanlagen hat sich gezeigt, dass eine Länge von 2 m bis etwa 5 m am geeignetsten ist, vorzugsweise zwischen 3 bis 4m. Die beiden anderen Dimensionen können wesentlich kleiner ausfallen. Der Durchmesser der Rotationsmasse für einen Tilger dieser Größe kann etwa zwischen 0.25 m und 0.75 m gewählt werden, obwohl auch Durchmesser > 0.75m einsetzbar sind. Ein Tilger mit solchen Ausmaßen kann im Prinzip nicht nur im Turm einer Windkraftanlage sondern auch in der Gondel innen oder außen angebracht werden.

Generell ist es erfindungsgemäß möglich, dass das Fahrwerk mit mehreren Antriebsrädern (1.3) und damit auch mehreren rotierenden Schwungmassen, insbesondere zwei Schwungmassen bzw. Rotationsmassenbauteilen ausgerüstet wird. Durch Variation der Größe bzw. des Durchmessers des auf der Laufschiene oder dem Laufrohr sich drehenden Antriebsrades kann auf die Drehzahl des Rades und damit auch die Drehzahl des mit ihm verbundenen Schwungrades und der Rotationsmasse Einfluss genommen werden, womit wiederum die Tilgerfrequenz variiert werden kann.

Es ist erfindungsgemäß auch möglich, die Drehzahl des Schwungrades durch Einbau eines Getriebes (10.1) um ein Vielfaches gegenüber dem Antriebsrad zu erhöhen. Somit ist auch Gegenstand der Erfindung ein entsprechender Schwingungstilger, bei dem zwischen Antriebsrad (1.3) und Rotationsmasseneinheit (1.5)(1.6)(30.7)(30.8) eine Getriebe verbaut ist, so dass die Drehzahl der Rotationsmasseneinheit größer ist als die des Antriebrades. Es ist ferner auch möglich, das Antriebsrad (1.3) und damit das Schwungrad (1.5) des Rotationsmassenbauteils oder das Schwungrad (1.5) selbst aktiv durch einen Motor anzutreiben.

Die bei der Bewegung der erfindungsgemäßen Rotationsmasseneinheit aufzubringenden Kräfte werden durch Reibung der Rollen oder Räder auf die Laufvorrichtung (Schienen oder Rohre) übertragen. So kann es insbesondere bei feuchter, öliger oder vereister Laufvorrichtung oder vereisten, feuchten oder öligen Rädern bzw. Rollen vorkommen, dass die Räder, insbesondere das Antriebsrad auf der Laufschiene oder dem Laufrohr, durchdrehen oder rutschen.. Dadurch wird die maximal mögliche Dämpfung und Frequenzeinstellung des Tilgers durch die Rotationschwungmasse limitiert. Erfindungsgemäß kann dies durch folgende Ausführungsformen verhindert werden: (i) die Rollen/Räder, insbesondere das Antriebsrad sind/ist aus einem Material gefertigt oder mit einem solchen beschichtet, welches einen hohen Reibungswert gegenüber der Laufvorrichtung besitzt; (ii) das Antriebsrad kann gegenüber der Laufvorrichtung so verspannt sein, dass dadurch die Rolleigenschaften der Vorrichtung nicht entscheidend beeinflusst werden; (iii) die Lauffläche der Schienen oder Rohre weisen ein Zahnriemenprofil auf dem entsprechenden Räder oder Rollen laufen, deren Lauffläche selbst ein entsprechendes Profil in der Weise aufweisen, dass die Verzahnungen der Räder oder Rollen in die Verzahnungen der Lauffläche der Laufvorrichtung passen.

Das Rotationsmassenbauteil umfasst erfindungsgemäß ein Schwungrad (1.5)(10.3), welches vorzugsweise aus leichtem Material wie Kunststoff oder Aluminium besteht und eine zentrale Welle oder Achse aufweist mit der es auf der einen Seite über ein Antriebsrad mit dem Fahrwerk verbunden ist. Auf der anderen Seite befinden sich die Rotationsmasse (1.6), die ebenso wie das Schwungrad rotiert. Die Achse oder Welle des Schwungrades und damit der Rotationsmasse ist so ausgerichtet, dass die Ebene des Rades weitgehend parallel zu den anderen Laufrädern auf den Schienen bzw. dem Laufrohr angeordnet ist, so dass im optimalen Fall die Drehrichtung der Rotationsmasse der Richtung der Laufvorrichtung und damit der Richtung des Fahrwerks entspricht.

Die Rotationsmasse kann aus einer Massenscheibe aber auch aus mehreren Scheiben bestehen, die entsprechend der benötigten Frequenzanpassung auf die Welle oder Achse aufgesteckt werden.

Generell kann die Frequenz unter anderem durch folgende Maßnahmen alleine am Schwungrad verändert werden: (i) Größe der Masse , (ii) Position der Masse bzw. des Massenschwerpunktes auf der Achse: so verändert sich das Massenträgheitsmoment, wenn die Masse radial nach außen oder nach innen geschoben wird, (iii) Position der Masse bzw. des Massenschwerpunktes in Bezug auf den Durchmesser des rotierenden Bauteils und (iv) Länge und Krümmung der Laufvorrichtung.

Gemäß einer bevorzugten Ausführungsform der Erfindung wird der Massenschwerpunkt (10.4) mittels einer Verschiebeeinrichtung (10.4.1) radial nach innen oder außen verschoben, was zu einer Änderung des Massenträgheitsmomentes führt, wodurch wiederum Einfluss auf die Eigenfrequenz genommen werden kann. In einer einfacheren Variante können einfach im Durchmesser größere oder kleinere Massenscheiben (bei gleicher Gesamt-Rotationsmasse) auf das Schwungrad montiert werden.

In weiteren Ausführungsformen der Erfindung kann neben der Dämpfung durch das Massenschwungradeine eine zusätzliche Dämpfung des Systems sinnvoll sein. So kann z.B. mittels des an sich bekannten Wirbelstromprinzip (i) eine Dämpfung in dem rotierenden Bereich des Schwungrads oder (ii) eine Dämpfung im Bereich der Laufräder in Verbindung mit der Schienen- Rohranordnung, wie unten ausführlicher beschrieben, erreicht werden.

Eine bevorzugte Ausführungsformen des erfindungsgemäßen Tilgers umfasst (i) eine Laufvorrichtung (7) aus zwei in Bewegungsrichtung parallel geführten Laufschienen (4), (ii) zwei hintereinander angeordneten freilaufenden Laufrädern (1.2), die auf der ersten Laufschiene (4) laufen, und (iii) ein Antriebsrad (1.3), welches auf der zweiten Laufschiene (4) gegenüber den beiden freien Laufrädern angeordnet ist und (iv) mit einem nach außenweisenden Schwungrad (1.5) mit mindestens einer Massenscheibe (1.6) verbunden ist, wobei Antriebsrad und Laufräder ebenso wie Tilger-Hauptmasse Bestandteile des Fahrwerks (1) sind.

Eine andere Ausführungsformen des erfindungsgemäßen Tilgers umfasst:
(i) eine Laufvorrichtung aus einem runden Rohr (70),
(ii) zwei hintereinander angeordnete Antriebsräder (70.1), welche jeweils ein Rotationsmassenbauteil (1.5)(1.6) antreiben,
(iii) zwei weitere hintereinander angeordnete Laufräder (70.2), die gegenüber den Antriebsrädern (70.1) angeordnet sind, sowie
(iv) mindestens zwei gegenüberliegende, stützende Querräder, die senkrecht zur Ebene der Antriebsräder angeordnet sind,
wobei alle Räder und eine entsprechend der Rohrkrümmung konkav geformte Lauffläche aufweisen, mittels der sie auf dem Rohr hin und her bewegt werden können, und wobei die Räder und ihre Lager gegeneinander durch entsprechende Spannmittel verspannt sind, so dass eine funktionell einwandfreie Bewegung des Fahrwerks (1) auf dem Rohr inklusive der Tilger-Hauptmasse (1.1) gewährleistet ist.

Da der erfindungsgemäße Tilger nur in einer Schwingungsrichtung, also nur linear, wirksam ist, ist es notwendig für Schwingungen in einer Ebene mindestens zwei solcher Schwingungstilger bereitzustellen, welche in unterschiedliche Richtungen, vorzugsweise 90° zueinander, wirksam sind. Somit ist auch Gegenstand der Erfindung eine Schwingungstilgeranordnung zur Dämpfung von Anregungsschwingungen aus zwei oder mehr unterschiedlichen Richtungen umfassend zwei oder mehrere erfindungsgemäße Schwingungstilger, wobei mindestens zwei Schwingungstilger bezüglich der Ausrichtung ihrer Laufvorrichtung in unterschiedlichen Richtungen in der zu dämpfenden Anlage positioniert sind. In einer bevorzugten Ausführungsform einer solchen Anordnung sind zwei erfindungsgemäße Schwingungstilger physisch miteinander kombiniert, bzw. verbunden.

Somit ist auch Gegenstand der Erfindung eine entsprechende Schwingungstilgeranordnung zur Dämpfung von Anregungsschwingungen aus zwei unterschiedlichen Richtungen, welche folgende Merkmale umfasst:
(i) einen ersten unteren Schwingungstilger gemäß einem der Ansprüche 1 - 29 mit einem Fahrwerk (30.5) einer Tilger-Hauptmasse (30.6) und einer Rotationsmasse (30.8), welche auf der Lauf-/Haltevorrichtung (30.4) bewegt werden, sowie
(ii) einen zweiten oberen Schwingungstilger gemäß einem der Ansprüche 1 - 29 mit einem Fahrwerk (30.1) und einer Rotationsmasse (30.7) welche auf der Lauf-/ Haltevorrichtung (30.3) bewegt werden, jedoch ohne eigene Tilger-Hauptmasse,
wobei der untere und der oberer Schwingungstilger einen Winkel bezüglich ihrer Laufvorrichtungen zueinander bilden, und der erste untere Schwingungstilger mittels einem an seiner Lauf-Haltevorrichtung angebrachten Verbindungselement (30.2) mit dem Fahrwerk (30.1) des zweiten oberen Schwingungstilgers verbunden ist und so an diesem oberen Fahrwerk (30.1) frei hängt und mit diesem in Richtung der Laufvorrichtung (30.3) des oberen Schwingungstilgers inklusive der Tilger-Hauptmasse (30.6) bewegt wird, während das Fahrwerk (30.5) des unteren Schwingungstilgers inklusive der selben Tilger-Hauptmasse (30.6) gleichzeitig in Richtung seiner eigenen unterschiedlichen Laufvorrichtung (30.4) bewegt werden kann, entsprechend den in den zwei unterschiedlichen Richtungen auftretenden wirksamen Störschwingungen.

Die erfindungsgemäßen Schwingungstilger und Anordnungen von Schwingungstilgern sind hervorragend geeignet, Schwingungen unter 5 Hz, insbesondere < 1 Hz, insbesondere < 0.5 Hz, vorzugsweise zwischen 0.1 und 0.25 zu dämpfen. Somit ist auch Gegenstand der Erfindung die Verwendung eines entsprechenden Schwingungstilgers oder einer Anordnung von Schwingungstilgern zur Dämpfung von Störschwingungen zwischen 5 Hz und 0.1 Hz, vorzugsweise zwischen 0.25 Hz und 1 Hz. Dabei kann die Frequenz um etwa 10 - 35%, insbesondere um etwa 20 - 30% geändert werden, wobei die Frequenzeinstellung sehr exakt und in kleinen Schritten vorgenommen werden kann. Diese Einstellung der Frequenz, bzw. deren Anpassung an die konkreten Schwingungsbedingungen kann wesentlich einfacher und genauer als beispielsweise mit dem Tilger, der aus der JP 08-200438 (A) oder der EP 2746483 (A1) bekannt ist. Überdies ist er leichter an den unterschiedlichsten Orten (Gondel, Turm) in der Anlage einbauen. Für die entsprechenden Frequenzänderungen sind dabei nur kleine Massen notwendig, die etwa 1/20 bis 1/4, vorzugsweise etwa 1/10 der schwingenden Hauptmasse betragen, was ein deutlicher Vorteil gegenüber vergleichbare Schwingungstilger des Standes der Technik ist.

So kann die Frequenz einer schwingende Hauptmasse von 250 kg mit einer Rotationsmasse von rund 65 kg mit einem Durchmesser von 0.25m um 20 - 30% verändert werden bei einer Länge der Laufvorrichtung von 2.5 m - 3.5 m. Bei einem Durchmesser der Rotationsmasse von 0.5 m ist für den gleichen Effekt lediglich eine Rotationsmasse von rund 15 kg notwendig, und bei einem Durchmesser von 0.75 m eine Rotationsmasse von etwa 7 kg. Weiter kann die Frequenz einer schwingende Hauptmasse von 500 kg mit einer Rotationsmasse von rund 130 kg mit einem Durchmesser von 0.25m um 20 - 30% verändert werden bei einer Länge der Laufvorrichtung von 2.5 m - 3.5 m. Bei einem Durchmesser der Rotationsmasse von 0.5 m ist für den gleichen Effekt lediglich eine Rotationsmasse von rund 30 kg notwendig, und bei einem Durchmesser von 0.75 m eine Rotationsmasse von etwa 15 kg. Weiter kann die Frequenz einer schwingende Hauptmasse von 1000 kg mit einer Rotationsmasse von rund 250 kg mit einem Durchmesser von 0.25m um 20 - 30% verändert werden bei einer Länge der Laufvorrichtung von 2.5 m - 3.5 m. Bei einem Durchmesser der Rotationsmasse von 0.5 m ist für den gleichen Effekt lediglich eine Rotationsmasse von rund 65 kg notwendig, und bei einem Durchmesser von 0.75 m eine Rotationsmasse von etwa 30 kg.

Gegenstand der Erfindung ist letztlich auch eine Windkraftanlage, welche mindestens einen Schwingungstilger oder mindestens eine Anordnung von Schwingungstilgern wie oben und in den Ansprüchen beschrieben aufweist.

### Detaillierte Beschreibung der Erfindung

Grundidee des hier beschriebenen Tilgersystems ist es kleine Massen durch große Schwingwege zu ermöglichen. Während Schwingungstilger in bisherigen Türmen Schwingwege von etwa nur 300 - 500 mm erreichen, können mit dem beschriebenen Tilger Schwingwege von mehr als 3000 - 5000 mm realisiert werden. Dies bedeute, dass bei etwa 10 - fachen Schwingweg die erforderliche Masse auf etwa 1/10 reduziert werden kann, was per se ein Vorteil ist. Allerdings müssen solche leichten Tilger in einem sehr genauen Verhältnis zur Turm-Eigenfrequenz abgestimmt werden. Das ist mit der beschriebenen Erfindung möglich.

Die Erfindung wird im Folgenden im Detail an Hand der Abbildungen beschrieben. Hierin und in der allgemeinen Beschreibung oben und in den Ansprüchen werden dabei folgende Bezugsgrößen verwendet:
- 1: gesamtes bewegliches Teil / Fahrwerk
- 1.1: Tilger-Hauptasse
- 1.2: Laufräder, frei rollend
- 1.3: Antriebsrad
- 1.4: Lagerung des Antriebsrades
- 1.5: Schwungrad (ohne Rotationsmasse)
- 1.6: variable Masse für Schwungrad/ Rotationsmasse
- 1.7: Querstützrollen
- 1.8: Bewegungsrichtung Tilger
- 1.9: Bewegungsrichtung Schwungrad
- 1:10: Antriebswelle
- 2: Feststellbremse
- 2.1: Magnet für Feststellbremse
- 2.2: Blattfedern zur Magnetführung der Feststellbremse
- 3: Haltekonstruktion
- 4: Laufschiene
- 5: Gegenlaufschiene/Führungsschiene/Stützschiene/Haltevorrichtung Laufvorrichtung
- 6: Endbiegung in Laufschiene
- 7: Laufvorrichtung (Laufschiene, oder Laufrohr, oder berührungsloses Magnetsystem)
- 10: Bewegliches Teil mit Gehäuse
- 10.1: Getriebe
- 10.2: Magnetbremse nach dem Stand der Technik
- 10.3: Schnelldrehendes Schwungrad
- 10.4: Im Radius verschiebbare Masse
- 10.4.1: Verstelleinheit
- 10.5: Gehäuse für Rolldämpfer
- 20: Reibungsdämpfer
- 20.1: Hebel für Reibungsdämpfer
- 20.2: Masse, verschiebbar
- 20.3: Reibbelag
- 20.4: Gelenk
- 20.5: Anschlag
- 20.6: Anlaufspalt
- 21: Laufbahn mit progressiver Kurve
- 30: kreuzweise Anordnung
- 30.1: Laufwerk oben
- 30.2: Verbindungselement zwischen Laufwerk oben und Haltekonstruktion unten
- 30.3: Haltekonstruktion oben
- 30.4: Haltekonstruktion unten
- 30.5: Laufwerk unten
- 30.6: Masse unten
- 30.7: Schwungmasse oben
- 30.8: Schwungmasse unten
- 40: Magnetdämpfer / Wirbelstromdämpfer
- 40.1: Schwungrad mit angeordnetem Magneten
- 40.2: Magnetanordnung
- 40.3: Alu- oder Kupferscheibe
- 40.4: Einstellvorrichtung zur optimalen Dämpfungseinstellung des Luftspaltes
- 40.5: Stahlplatte
- 40.6: Luftspalt
- 50: Platzierung in der Gondel
- 50.1: Anordnung Gondel oben (Längsrichtung)
- 50.2: Anordnung auf Gondeldach (Längsrichtung)
- 50.3: Anordnung auf Gondeldach (Längsrichtung) mit Einhausung
- 50.4: Kreuzweise Anordnung in der Gondel und auf dem Gondeldach
- 50.5: Anordnung in und auf der Gondel
- 50.6: Queranordnung Gondeldach oben
- 50.7: Queranordnung Gondeldach innen
- 60: Anordnung im Turm
- 60.1: Tilger oben
- 60.2: Tilger unten
- 60.3: Turmbefestigung
- 60.4: Frequenzeinstellung über zusätzliche Zugfeder
- 60.5: Seil
- 70: Rundes Laufrohr
- 70.1: Rolle oben (Antriebsrolle)
- 70.2: Rolle unten
- 70.3: Querrolle
- 80: Magnetdämpfer / Wirbelstromdämpfer
- 80.1: Leiterblech aus beispielsweise Alu- oder Kupfer - breit an den Endbereichen der Laufschiene - entlang der Radführung einer L-förmigen Laufschiene (4) oder der Führungsschiene (5).
- 80.2: Leiterblech aus beispielsweise Alu- oder Kupfer - schmaler Bereich in der Mitte der Laufschiene - entlang der Radführung einer L-förmigen Laufschiene (4) oder der Führungsschiene (5)
- 80.3: Laufräder (1.2) (oder Antriebsräder (1.3)) entlang der Stützbleches (80.5)
- 80.4: Magnetanordnung radial um Laufräder / Antriebsräder
- 80.5: Stützblech mit darauf befestigten Leiterblech (80.1, 80.2)
- 91: Laufrad/Antriebsrad mit Zahnprofil auf Lauffläche
- 92: Zahnriemenprofil /-schicht auf Laufschiene/Laufrolle (4)
- 93: flache Aufstandsfläche Zahnriemenprofil bzw. Zahnprofil des Laufrades

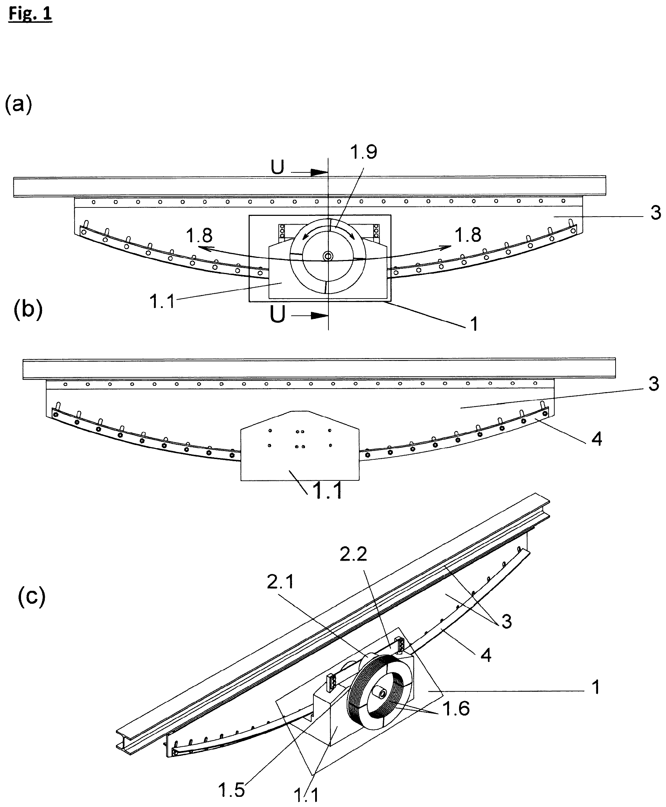

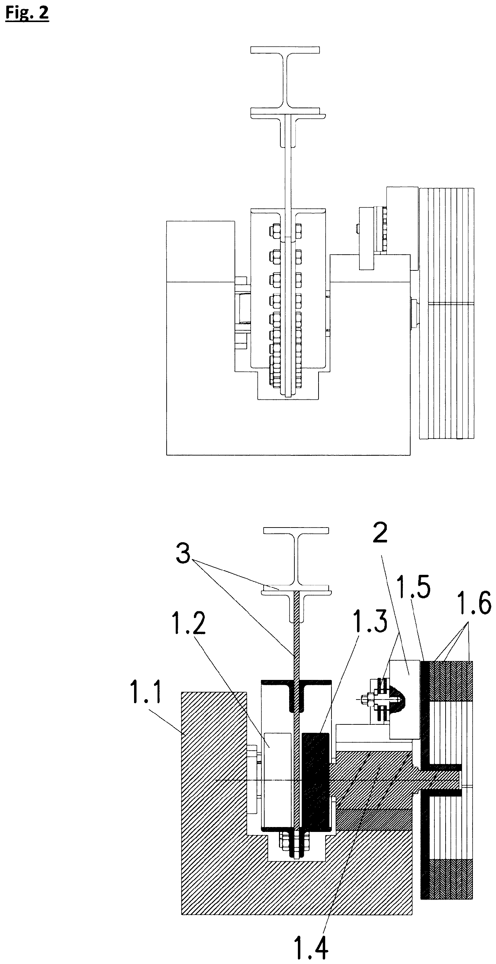

Fig. 1 - 3 zeigen den erfindungsgemäßen Rolltilger aus unterschiedlichen Anordnungen und Positionen.

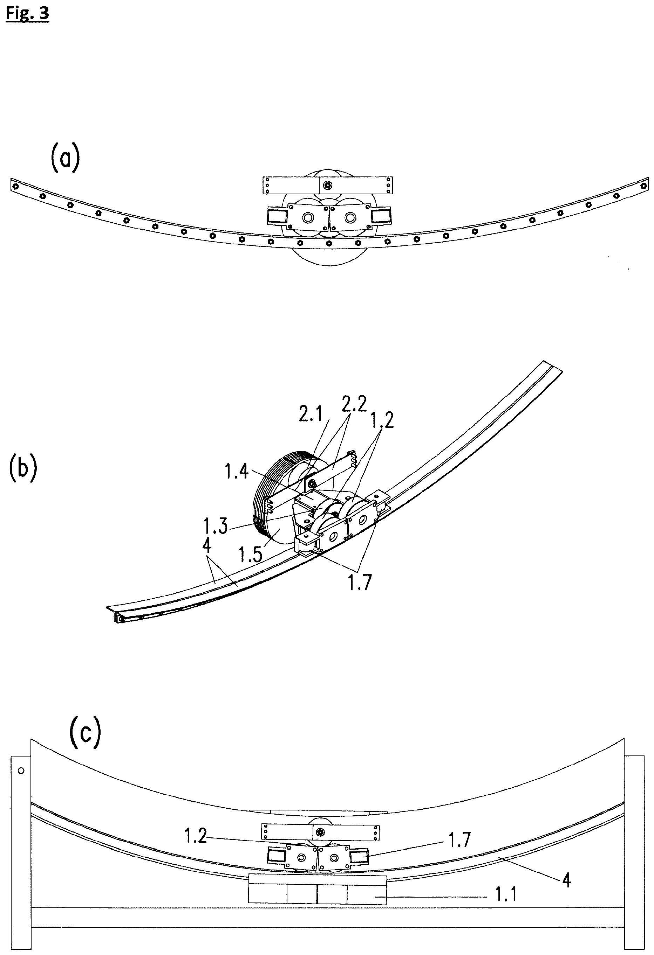

Fig. 1 (a) - (c) zeigt einen Rollentilger welcher aus dem gesamten beweglichen Teil besteht, welches sich auf einer Kreisbogen förmigen Laufbahn rollt und somit eine Kreisbewegung, ähnlich einem einseitig ausgelenktem Pendel bewegt. Das bewegliche Fahrwerk (1) wird auf mindestens drei Laufrollen bewegt. Zur seitlichen Abstützung sind Quer-Stütz-Rollen (1.7) angebracht (Fig. 3). Die Laufschienen (4) sind mit der Haltekonstruktion (3) verbunden. Zur Justierung können Löcher angebracht sein. An zumindest einer der Laufrollen ist eine durch die Laufrolle angetriebene rotierende Masse (Schwungrad 1.5) angebracht. Beim kreisförmigen Bewegen des beweglichen Teiles (1) in die Bewegungsrichtung (1.8) dreht sich das Schwungrad in die Richtung (1.9). Durch die Rotations-Masse des Schwungrades wird die Eigenfrequenz des Tilgers beeinflusst. Somit kann durch unterschiedliche Schwungmasse die Eigenfrequenz des Tilgers exakt auf die benötigten Werte eingestellt werden.

Es kann für bestimmte Einsatzziele erforderlich sein, den Tilger während des Betriebes der Anlage festzusetzen. Neben mechanischen Systemen kann dies durch eine elektromagnetische Bremse geschehen. In einer weiteren Ausführungsform der Erfindung umfasst der Tilger eine Feststellbremse (2), bei der sichergestellt ist das diese im Stillstand der Anlage gelöst wird. Dazu wird ein Elektro-Magnet (2.1) an zumindest einer oder auch mehreren Blattfedern so befestigt, dass dieser sich axial bewegen kann. Solange der Magnet stromlos ist, wird er von den Blattfedern (2.2) zurückgehalten. Wird er mit Strom beaufschlagt, so bewegt er sich zur Schwungscheibe und bremst diese ab. Da die Schwungscheibe am außen Durchmesser eine höhere Geschwindigkeit und damit kleinere Portion-Kräfte aufweist als der Tilger selbst, sind relativ kleine Magnete zum Bremsen ausreichend. Alternativ kann der Magnet auch an anderen beweglichen Teil (1) als Haltekonstruktion wirken.

Die Größe der Schwungmasse steigt mit zunehmender Masse, und mit zunehmendem Radius an welchem die Masse wirkt. Die Wirkung auf die Tilgerfrequenz steigt mit zunehmender Schwungmasse und mit zunehmender Drehzahl zum Quadrat. Deshalb wird im ersten Ansatz ein möglichst großes Schwungrad mit einer möglichst kleinen Rolle angetrieben, so dass die Schwungmasse und vor allem die Drehzahl möglichst groß sind.

Die Einstellung der Eigenfrequenz des Tilgers erfolgt in dem mehr oder weniger Masse am Schwungrad befestigt wird. Gleichzeitig ist es auch möglich die Eigenfrequenz dadurch zu beeinflussen, indem die Schwungmasse (1.6) radial verschoben wird. Wichtig ist es, dass die Reibung des Rades ausreicht, die Masse mit der entsprechenden Beschleunigung anzutreiben. Dabei ist es vorteilhaft, dass bei der Dreiradanordnung die Schwungmasse an einem der drei Räder angebracht ist, so dass die Hälfte der Masse auf ein Rad wirkt. Gleichzeitig wird die Belastung auf dieses Antriebsrad (1.3) mit zunehmender Schwingmasse größer, was gleichzeitig hilft die größere Schwingmasse bei gleich bleibendem Reibungsfaktor anzutreiben. Mit dieser Methode kann die Eigenfrequenz des Tilgers um 10 % bis 30 % verstimmt werden.

Das Trägheitsmoment der Schwungmasse (1.6) ist definiert durch Masse x Abstand zum Quadrat. [kg x mm²]. Aufgrund der vom Gewicht der schwingenden Masse und der möglichen Reibwerte zwischen Antriebsrad und Schiene abhängigen maximalen Antriebskraft ist das maximale Schwungmoment und damit die Größe der Schwungmasse 1.6 mit Schwungrad 1.5 begrenzt. Ein Antriebsrad mit größerem Radius kann auch ein entsprechend größeres Schwungmoment antreiben, hat aber eine kleinere Drehzahl zur Folge. Zum Beispiel kann bei einem 0,25 Hz Tilgersystem bei einem Radius des Antriebsrades von 100 mm mit dem beschriebenen System pro kg Tilger-Hauptmasse (1.1) -bei halber Last auf das Antriebsrad (1.3) -eine gesamte Rotationsmasse (1.6) von etwa 5000 kg x mm² angetrieben werden. Damit kann die Frequenz zwischen 10 und 30%, insbesondere um etwa 20% beeinflusst werden. Bei einem Durchmesser der Schwungmasse von beispielsweise 450mm ergibt das eine rotierende Masse von etwa 0,1kg /kg Tilgergewicht. Das heißt, dass z.B. zur Frequenz-Verstimmung um 20% etwa 10% der Tilger-Hauptmasse (1.1) als Rotationsmasse (1.6) mit einem Durchmesser von 450mm rotieren müssen. Durch Verschiebung des Schwerpunktes der schwingenden Hauptmasse (1.1) in Richtung Antriebsrad kann die Auflast auf das Antriebsrad (1.3) und damit die mögliche Schwungmasse vergrößert werden. Ein hoher Reibungswert zwischen Antriebsrad und Schiene wirkt sich hier ebenfalls positiv auf die mögliche Frequenzspreizung aus. Da zur Anpassung der üblichen Frequenzabweichung baugleicher Türme ein Einstellbereich von +-5% ausreicht, müssen die mit dem System erreichbaren Einstellmöglichkeiten nicht voll ausgeschöpft werden.

Die Masse des Schwungrades (1.5) ist eine feste Größe, welche zwar durch die Reibung zwischen Antriebsrad (1.3) und Schiene / Rohr angetrieben werden muss, aber nicht wesentlich zum Einstellbereich beiträgt. Deshalb sollte die Rotationsmasse (1.6) des Schwungrades (1.5) möglichst klein sein. Vorzugsweise ist das Schwungrad (1.5) vorzugsweise aus einem Leichtmetall oder Kunststoff und wird für einen möglichst großen Einstellbereich verwendet. Eine weitere Vergrößerung des Einstellbereiches ist möglich durch die Verwendung von Zahnstangen, Ketten oder Zahnrieben, welche das Antriebsrad direkt oder indirekt formschlüssig antreiben.

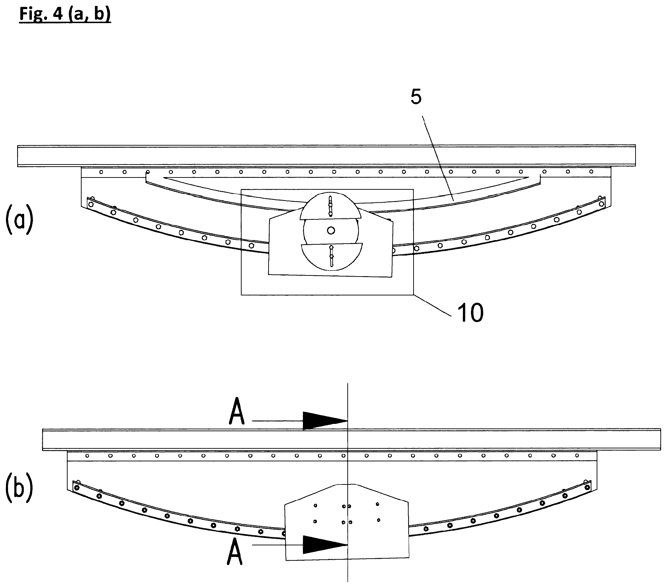

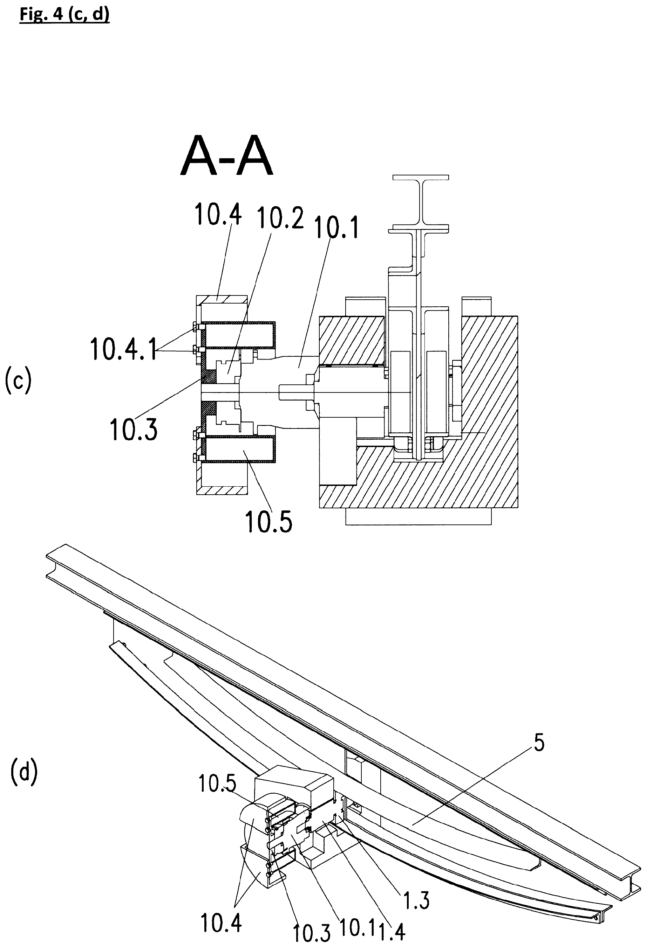

Eine weitere Möglichkeit ist es, wie in Fig. 4 dargestellt, ein Getriebe (10.1) zu verwenden, so dass die Drehzahl der Rotation-Schwungmasse (1.6) möglichst hoch wird. Dadurch kann die variable Rotationsmasse aufgrund der hohen Drehzahl geringer ausfallen. So wird zum Beispiel bei einer Getriebeübersetzung von 5 eine um 5² = 25-fache Wirkung erreicht. D.h. bei gleichem Durchmesser wird nur der 25. Teil der Masse die bei einer nicht übersetzten Schwungscheibe erforderlich wäre, benötigt. Mit einer einfachen Einstellvorrichtung (10.4.1) kann die variable Masse im Radius bzw. Durchmesser verschoben werden. Natürlich kann bei einem schnell rotierenden System eine relativ kleine Magnet-Torsions-Bremse (10.2) verwendet werden. Auch ist es einfach möglich, den Tilger durch das Einschalten von Elektromotoren aktiv zu gestalten. Zur Frequenz-Verstimmung von 10-20 % sind mit der Übersetzungsstufe von 5 und Schwungrad- Durchmesser von beispielsweise 200 mm wäre etwa nur 1 % bis 2 % der schwingenden Masse erforderlich. Da ein Getriebe ein zusätzliches Bauteil ist, welches gewartet werden muss, hat die einfache Schwungscheibe, trotz der größeren benötigten Schwungmasse zur Einstellung der Eigenfrequenz den Vorteil der einfachen Konstruktion und einem deutlich geringeren Wartungsaufwand.

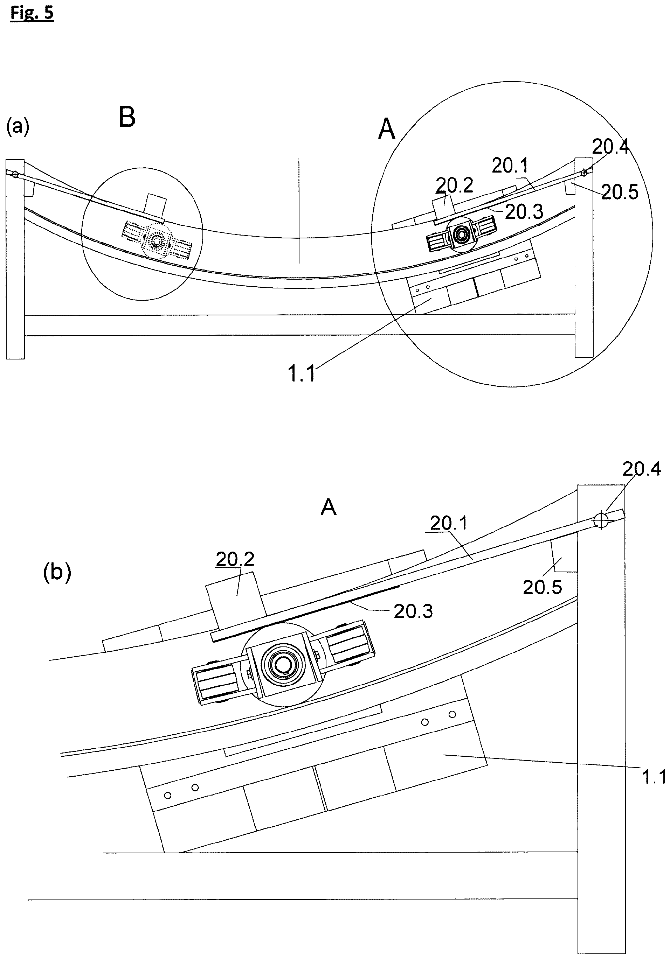

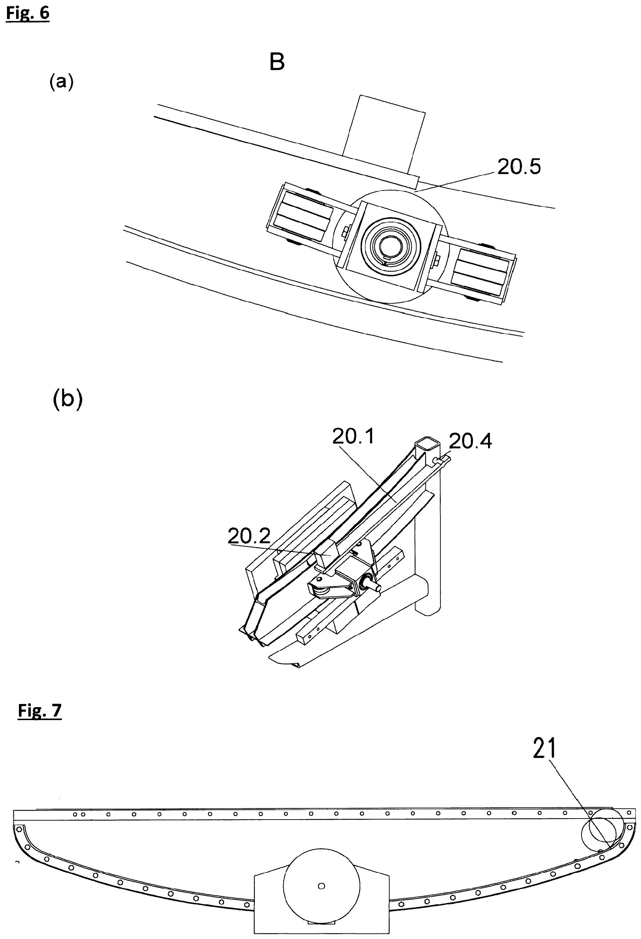

Durch außergewöhnliche Einflüsse verursachte Schwingungen und Stöße kann das Tilgersystem stärker belasten werden, als es im allgemeinen Betrieb üblich ist. Somit ist es möglich, dass der Schwingungstilger stärker ausgelenkt wird als das im normalen Betrieb üblicherweise vorkommt. Um ein Anschlagen des Tilgers zu verhindern, kann ein Endlager-Dämpfer nach dem Stand der Technik eingesetzt werden. Eine einfache weitere Ausführungsform gemäß der Erfindung im Zusammenhang mit einer stärkeren Dämpfung von starken Schwingbewegungen des Tilgers ist der in Fig. 5 und 6 beschriebene Reibungsdämpfer (20), der nur bei großen Auslenkungen des Tilgers wirksam wird. Dieser Reibungsdämpfer umfasst beispielsweise einen Hebel (20.1), der in dem Gelenk (20.4) gelagert ist und durch den Anschlag (20.5) am Nachuntenkippen gehindert wird. Der Hebel kann einen zusätzlichen Reibbelag enthalten, mit dem er bei größerer Amplitude auf zumindest einem Rad gleitet und dieses bremst. Mit zunehmendem Weg wird aufgrund der geometrischen Verhältnisse und durch die Wirkung der Masse (20.2) die Anpresskraft des Hebels auf das Rad und damit die Reibung vergrößert. Somit ist eine progressive Dämpfung möglich. Dadurch, dass die Masse (20.2) auf der Längsachse des Hebels verschiebbar ist, kann die Dämpfung dieses Systems den Erfordernissen angepasst werden. Durch den Anschlag (20.5) wird der Hebel so eingestellt, dass beim Anfahren des Hebels noch ein Spalt (20.6) vorhanden ist, so dass die Einfahrt der Rolle in den Hebel kontinuierlich erfolgen kann.

Eine weitere Möglichkeit einen sanften bzw. kontrollierbaren Endanschlag zu realisieren ist die Ausbildung der Laufschiene (4) zu einer nach oben gerichteten steiler werdenden Krümmung (21) gemäß Fig. 7. Grundsätzlich kann jede Kurvenfahrt bzw. jedes Kurvenprofil, was ein Abrollen gewährleistet, realisiert werden, wobei die theoretisch optimale Form durch eine Rollradkurve (Zykloide) beschrieben wird. Diese ist jedoch bei den vorgesehenen Rollradien der Kreisbahn sehr ähnlich. Auch ein aus geraden und gekrümmten Elementen zusammengesetztes Kurvenprofil verwendet werden.

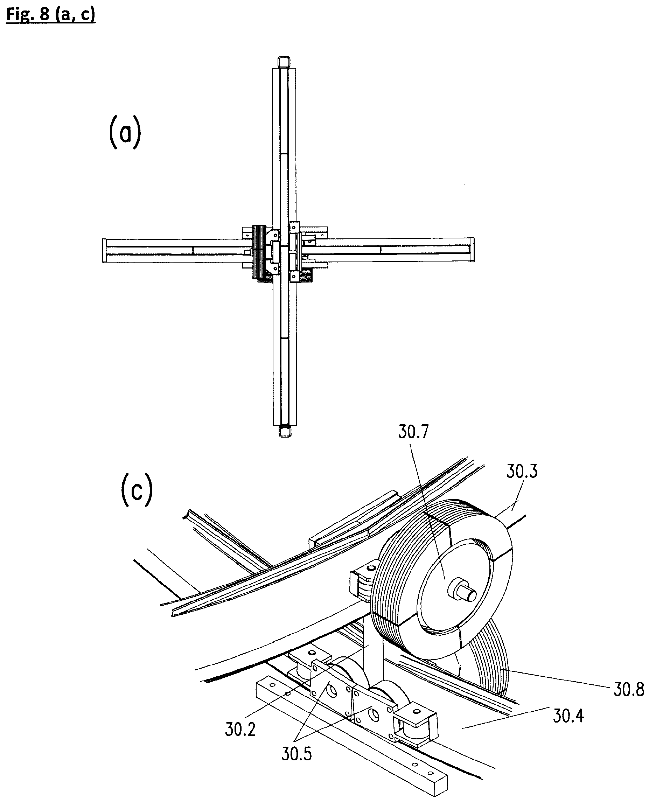

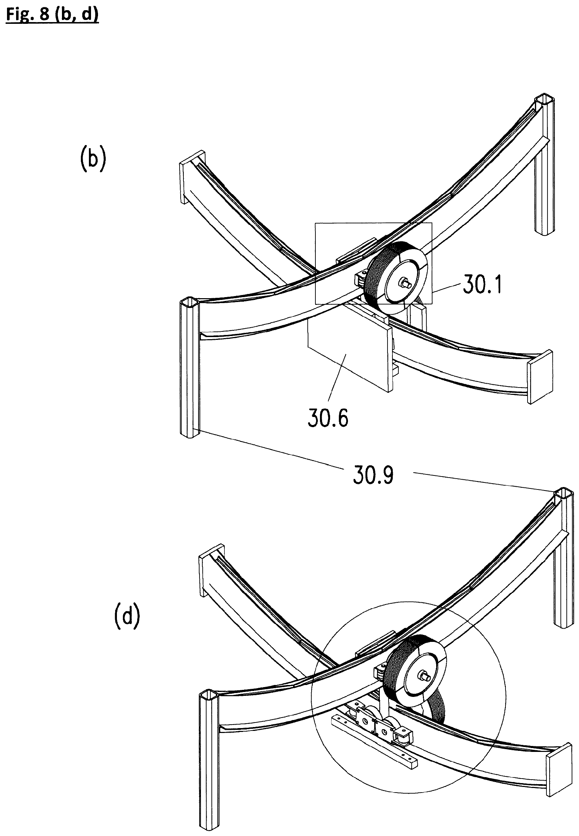

Der bisher beschriebene Schwingungstilger wirkt nur in einer Richtung, also linear. Um den Tilger in der gesamten Ebene eines schwingenden Bauteils betreiben zu können gibt es zum einen die Möglichkeit mehrere getrennte Tilger (mindestens 2) in unterschiedlichen Richtungen (90° bei zwei Tilgern) zu betreiben und in einer Anlage unterschiedlich anzuordnen. Fig. 8 zeigt z.B. ein System von kombinierten Schwingungstilgern, bei dem zwei Laufvorrichtungen / Haltevorrichtungen überkreuz vorzugsweise im 90°-Winkel angeordnet sind. Der Aufbau ist so, dass eine gekrümmte Laufschiene (30.3) nur ein Fahrwerk (30.1) ohne zusätzliche Haupt-Masse besitzt. An diesem Fahrwerk ist auch das Schwungrad (30.7) angebracht. Das Laufwerk oben (30.1) ist mit dem Verbindungselement 30.2 mit der Haltekonstruktion unten (30.4) verbunden. Auf dieser Haltekonstruktion (30.4) läuft dann das Laufwerk (30.5) mit der Haupt-Masse unten (30.6). Damit wirkt die Masse unten (30.6) in beide Richtungen. Aufgrund der zurückliegenden niedrigen Eigenfrequenzen und damit relativ kleinen Kräften kann ein solches System mit dem Verbindungselement (30.2) ausreichend stabil gebaut werden. Für die Stabilität wichtig ist, dass stabile Profile, zum Beispiel Kastenprofile verwendet werden.

Wie bereits erwähnt, können die Radien der parallel zur Bewegung laufenden Laufschienen/Laufrohre unterschiedliche sein. Durch unterschiedliche Radien der Laufschienen können unterschiedliche Frequenzen in unterschiedlichen Richtungen eingestellt werden. Neben der dargestellten nicht-übersetzten Schwungmasse können natürlich auch die bereits beschriebenen Getriebe eingesetzt werden und damit entsprechend geringere Schwungmassen verwendet werden.

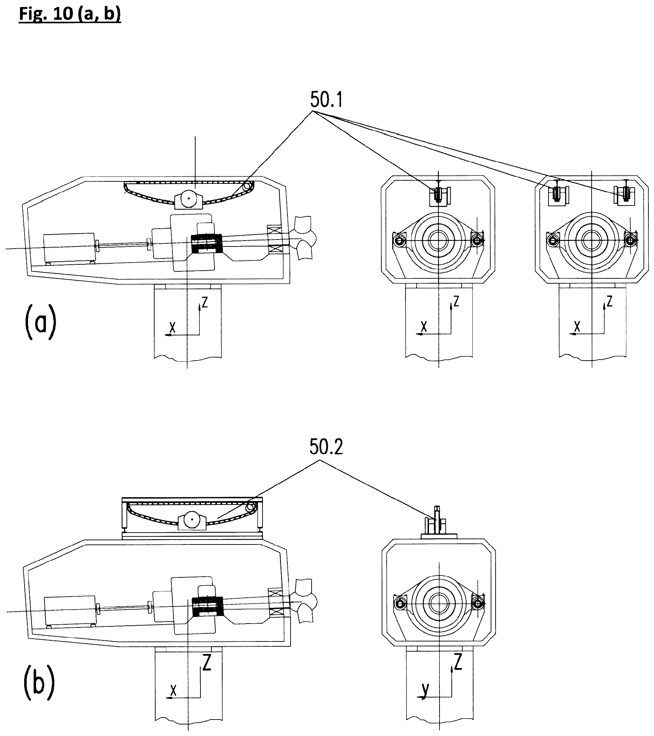

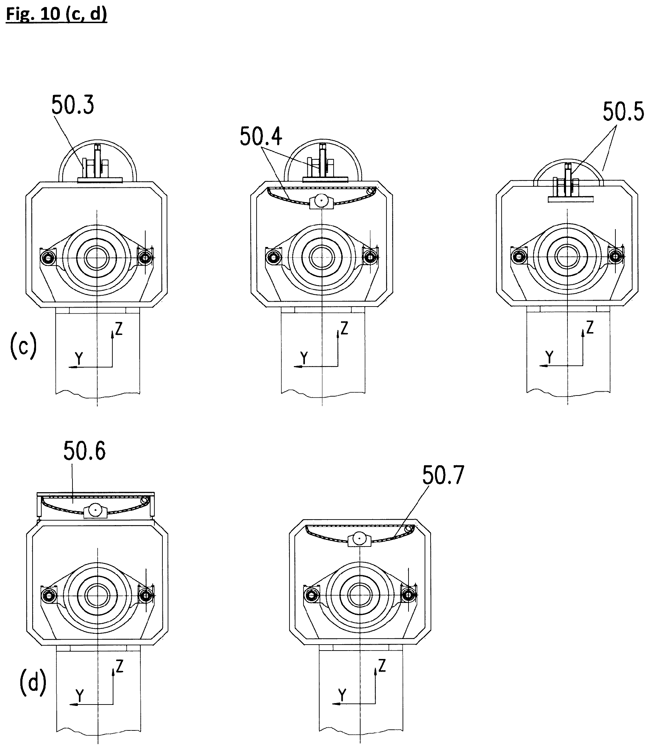

Aufgrund der länglichen schlanken aber dennoch recht kompakten Bauweise des Tilgers bestehen im Gegensatz zu den bisher eingesetzten klassischen Pendeltilgern neue Möglichkeiten, den Tilger in der zu dämpfenden Anlage zu positionieren und anzuordnen (Fig. 10). So bietet es sich an, den Tilger möglichst weit oben in der Windkraftanlage anzubringen, da dort die größte Wirkung bei der Dämpfung der ersten Turm-Eigenfrequenz erreicht wird. So kann der axial wirkende Tilger im oberen Bereich der Gondel platziert werden. Je nach Platzverhältnissen kann so erfindungsgemäß ein Tilger mittig, ein Tilger exzentrisch, oder auch mehrere Tilger (50.1) eingesetzt werden. Auch können die Tilger (50.2) auf der Maschinengondel positioniert werden. Die Tilger können zudem außen auf der Gondel im Freien laufen. Idealerweise wird bei Platzierung auf der Gondel ein Gehäuse angebracht. Heutige Gondeln haben eine Breite von mehr als 4 m, so dass die Tilger auch in Querrichtung in die Gondel eingebaut werden können. Somit ergibt sich auch die Möglichkeit einen erfindungsgemäßen Tilger quer zur Gondel und einen Tilger längs zur Gondel (50.4) einzubauen, oder der Tilger kann gemäß auf der Gondel quer (50.6) oder auch innerhalb der Gondel quer (50.7) eingebaut werden. Auch ist es möglich die erfindungsgemäße Tilgeranordnung mit der kreuzweisen Anordnung (30) in der Gondel oder auf der Gondel anzubringen.

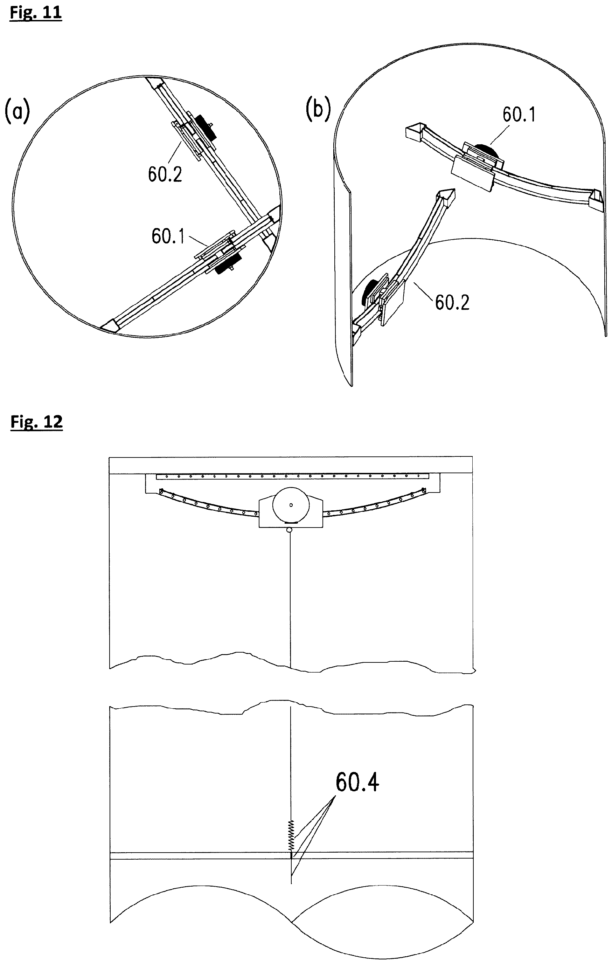

Der erfindungsgemäße Tilger ist auch hervorragend geeignet, im Turm der Windkraftanlage, bzw. in entsprechenden hohen schlanken Gebäuden eingebaut zu werden, um dort die niederfrequenten Schwingungen von unter 5 Hz, insbesondere unter 1 Hz zu dämpfen. Da der Turm richtungsunabhängig ist, muss im Turm auf jeden Fall je ein Tilger für beide Richtungen vorgesehen werden. Das kann in einer Ebene passieren. Da aber in der Regel im Turm einer Windkraftanlage weitere technische Einbauten notwendig sind, welche zum Teil erheblichen Platz benötigen, können einzelne lineare Tilger gemäß der Erfindung richtungs- und höhenversetzt im Inneren des Turms dort angebracht werden, wo genügend Platz vorhanden ist, wie in Fig. 11 dargestellt.

In einer anderen Ausführungsform der Erfindung ist der erfindungsgemäße Tilger, wie in Fig. 12 gezeigt, zusätzlich mit einer Vertikalfeder ausgestattet, wodurch die Frequenz weiter beeinflusst werden kann. Dazu ist eine vertikal wirkende Feder (60.4), z.B. über ein Seil, am Tilger und am Gebäude-/Turmboden, oder auch an einer Wand, befestigt, bzw. eingespannt, wobei die Feser-Seillänge mindestens die doppelte Länge des Schwingweges aufweisen sollte. Die längseinstellbaren Stahlfeder (60.4) kann nun mehr oder weniger stark verspannt werden, was die Frequenz des Tilgers beeinflusst. Es ist auch möglich die Frequenz Einstellung über die Schwungscheibe mit der Frequenzeinstellung durch die Zugfeder zu kombinieren.

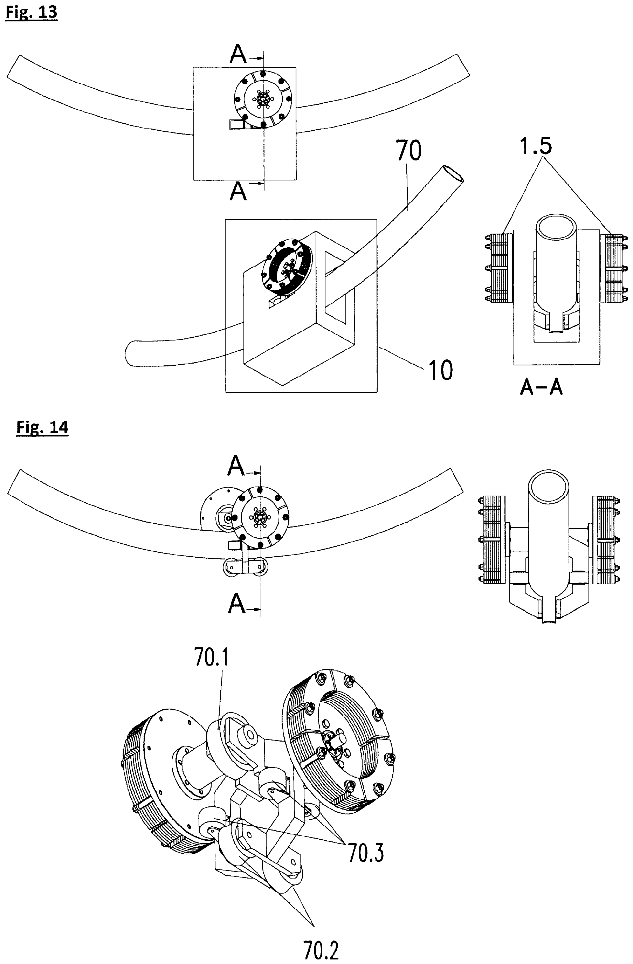

Fig. 13 und 14 stellt erfindungsgemäße Schwingungstilger dar, welche statt einer Laufschienenanordnung als Laufvorrichtung ein rundes Laufrohr mit Fahrwerk und im konkreten Fall zwei Rotationsmassen (1.5), Laufrädern (70.1)(70.2) und Stützrädern (70.3).

Die erfindungsgemäßen Schwingungstilger können, wie bereits oben erwähnt, auch noch zusätzlich gedämpft werden, wobei aufgrund der verhältnismäßig kleinen erforderlichen Tilgermassen entsprechend geringe Dämpfungswerte erforderlich sind..

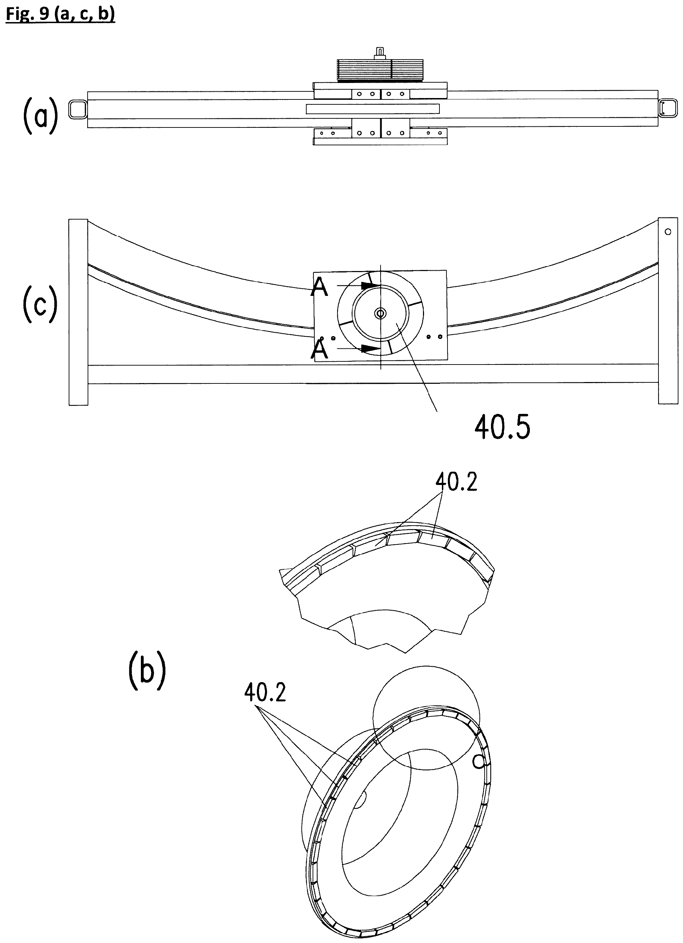

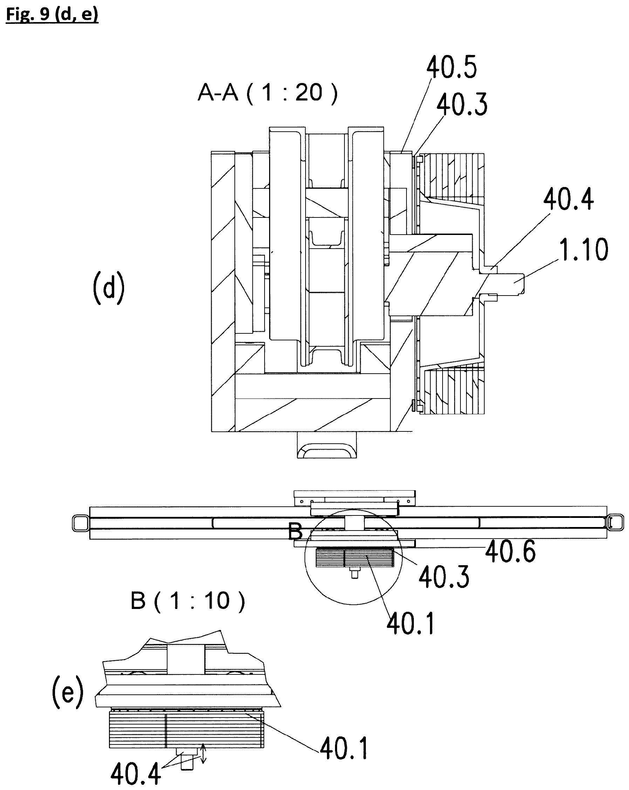

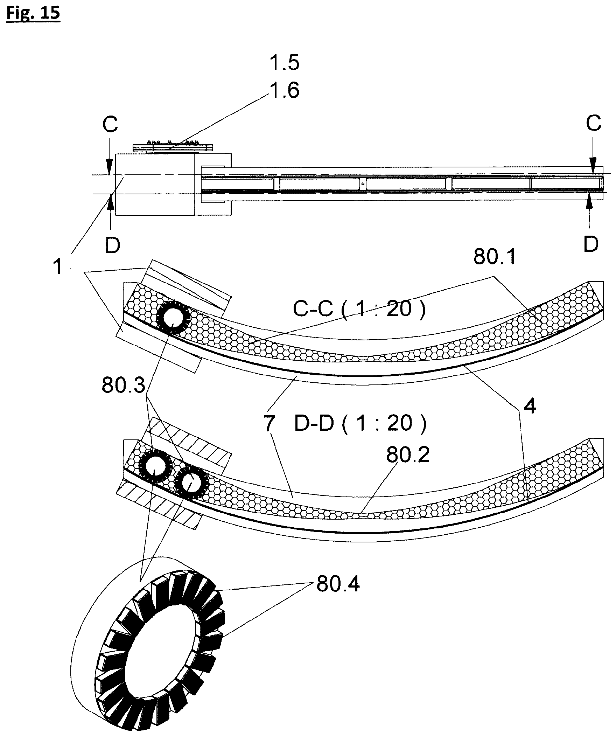

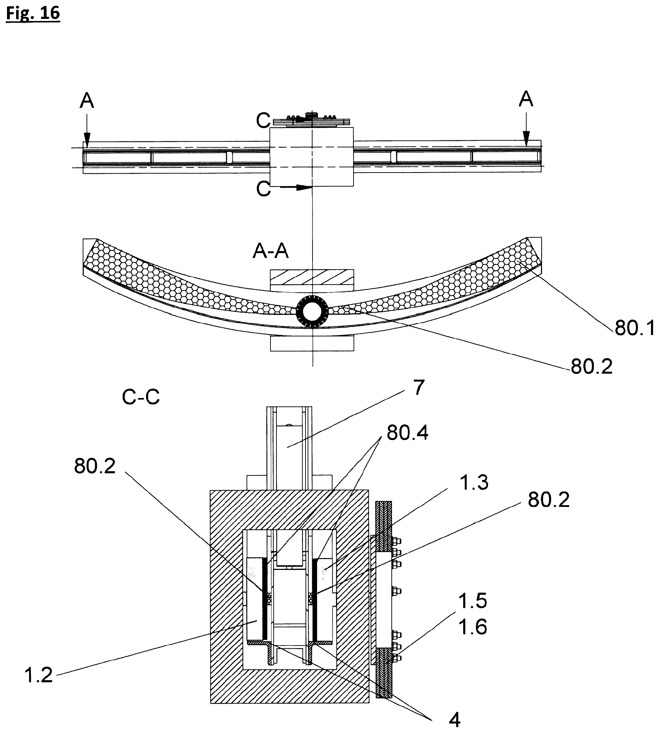

Folgende Alternativen können hierbei erfindungsgemäß realisiert werden:
- zusätzliche Dämpfung durch dämpfende Materialien: die Laufrollen (1.2) und Antriebsräder (1.3) können aus dämpfenden Materialien hergestellt werden. Das können Kunststoffe, wie zum Beispiel Polyurethan und alle Arten von Elastomeren sein. Systeme mit dämpfenden Laufrollen können bei Einsätzen, bei denen keine Temperaturschwankungen über 20 °C auftreten verwendet werden. Da die Dämpfung elastische Rollen durch Kunststoffe oder Elastomer jedoch temperaturabhängig ist, werden die Laufrollen mit einer möglichst geringen Dämpfung eingesetzt und die Dämpfung durch zusätzliche Elemente, welche keinen Temperatureinfluss erfahren, erreicht. Für das Antriebsrad (1.3) wird jedoch ein Werkstoff mit größerem Reibungskoeffizienten wie zum Beispiel hoch-shoriges Polyurethan verwendet, um dieses am Rutschen auf der Schiene oder dem Laufrohr zu hindern. Gleichzeitig hat das Antriebsrad aufgrund der Gewichtsverteilung die höchste Antriebskraft. Die frei rollenden Laufräder 1.2 und die Querstützenrollen (1.7) werden aus Werkstoffen mit geringem Reibungswert verwendet. (Teflon, Polyester, Stahl). Mit dieser Kombination wird eine verhältnismäßig kleine Dämpfung durch Rollwiderstände, welche Temperatur abhängig ist, erreicht. Somit kann der größere Anteil der erforderlichen Dämpfung durch zusätzliche Temperatur unabhängige Dämpfer erreicht werden.
- zusätzliche Dämpfung im rotierenden Bereich des Schwungrads (Fig. 9):
   (a) Eine einfache Methode ist es dabei, das Schwungrad mit einem zylindrischen Hohlraum auszuführen und die Dämpfung durch in dem Hohlraum rotierende Bauteile (Sand, Stahlkugeln, Flüssigkeit) zu erreichen.
   (b) Eine weitere elegantere Methode ist der Einsatz eines Wirbelstrom -Dämpfers, wie er an sich im Stand der Technik bekannt ist. Hierzu wird entweder das Schwungrad beispielsweise am Außendurchmesser mit Permanentmagneten (40.2) bestückt und gleichzeitig wird eine elektrische Leiterscheibe, z.B. aus Aluminium oder Kupfer (40.3) auf einer nicht rotierenden Stahlplatte befestigt, die z.B. Teil der schwingenden Masse ist (Fig. 9). Es ist aber auch umgekehrt möglich, das rotierende Schwungrad selbst aus Aluminium oder Kupfer oder entsprechenden Legierungen zu fertigen und die Magnete am Außendurchmesser oder kreisförmig im Umfang einer fest-montierten nicht rotierenden Platte zu befestigen, welche beispielsweise zwischen dem Schwungrad und der Rotationsmasse angebracht ist. Durch das vorbeigleiten der Magnete über der Aluminiumplatte, bzw. umgekehrt, wird ein Widerstandsmoment erreicht, was zu einer Dämpfung führt, die Temperatur unabhängig ist. Die Dämpfung solcher Systeme muss möglichst exakt eingestellt werden. Um das zu erreichen befindet sich bei einer weiteren Ausführungsform der Erfindung auf der Antriebswelle (1.10) eine einstell-Vorrichtung (40.4), mit welcher das Schwungrad (1.5) axial verschoben werden kann und damit der Luftspalt (40.6) zur exakten Dämpfungseinstellung verändert werden kann.
   (c) Eine weitere Möglichkeit die Dämpfung zu realisieren sind ebenfalls Magnete am Schwungrad, welche vor einer stationär angebrachten zum Ende hin breiter werdenden Aluminiumplatte laufen. Mit der immer breiter werdenden Aluminiumplatte wird die von den Magneten überstrichene Fläche größer wodurch sich die Dämpfung vergrößert. Das bewirkt eine zum Ende des Schwingweges progressive Dämpfung.
- zusätzliche Dämpfung im Bereich der Laufräder - Schienenanordnung (Fig. 15, 16): Um eine variabler Dämpfung über den Schwingweg der Tilgermasse zu ermöglichen kann eine Wirbelstromdämpfung auch über die Laufräder (1.2)(1.3) bewerkstelligt werden. Hierbei sind vorzugsweise die Permanentmagnete (80.4) an einem oder auch mehreren besagten Rädern (80.3) (1.2)(1.3) angeordnet und drehen sich mit diesen. Die Räder laufen an einer zu ihnen parallel angeordneten Leiterplatte (80.1, 80.2), vorzugsweise aus Aluminium, Kupfer oder Legierungen hiervon, vorbei, wobei der bremsende bzw. dämpfende Wirbelstrom generiert wird. Die Leiterplatte kann an einer Stützplatte oder Stützschiene (80.5) (5) angebracht sein, oder an einem entsprechend angeordneten Teil der Laufschiene (4), sie kann aber auch ein eigenständiges Bauteil sein, welches die besagte Stützschiene bildet.
   In einer weiteren Ausführungsform Fig. 15 und 16 ist die Leiterplatte nicht von gleicher Breite sondern ist an den Enden der Laufschienenvorrichtung breiter (80.1) als in der Mitte (80.2). Somit erfolgt am Ende des Schwingweges eine größere Dämpfung der Bewegung als beim mittigen Durchlauf. Vorteil dieser variablen Dämpfung ist, dass größer werdende Amplitude der Schwingung des Tilgers die Dämpfung ansteigt. Dies ist insbesondere bei stoßartigen Belastungen des Turmes einer Windkraftanlage von Vorteil. Umgekehrt tritt bei dieser Anordnung im Bereich kleiner Amplituden, also bei einer nur geringen Auslenkung aus der Mittellage der Schwingungstilgers nur eine geringe zusätzliche Dämpfung auf, wodurch ermöglicht wird, dass sich die Laufrollen/Laufräder bereits bei kleinsten Turmbewegungen bewegen können. Somit wird eine kontinuierliche Verteilung des Radlagerschmierfettes auch bei kleinsten Turmbewegungen bzw. Schwingungen bewirkt, was einem Stillstandsverschleiß der Lagerungen entgegenwirkt. Fig. 15 zeigt die entsprechende Anordnung im Bereich maximaler Auslenkung der Schwingmasse. Fig.16 zeigt die Anordnung bei kleinen Bewegungen des Schwingungssystems bzw. beim Durchlauf durch die Mittellage.
- Bei den schnell laufenden Systemen mit Getriebe können erfindungsgemäß auch bremsende Magnete nach dem Stand der Technik eingesetzt werden. Diese können auch gleichzeitig als Bremse verwendet werden. Auch ist es möglich elektrische Motoren als Bremse zu verwenden. Mit diesen können solche Schwingungstilger auch aktiv an getrieben werden.

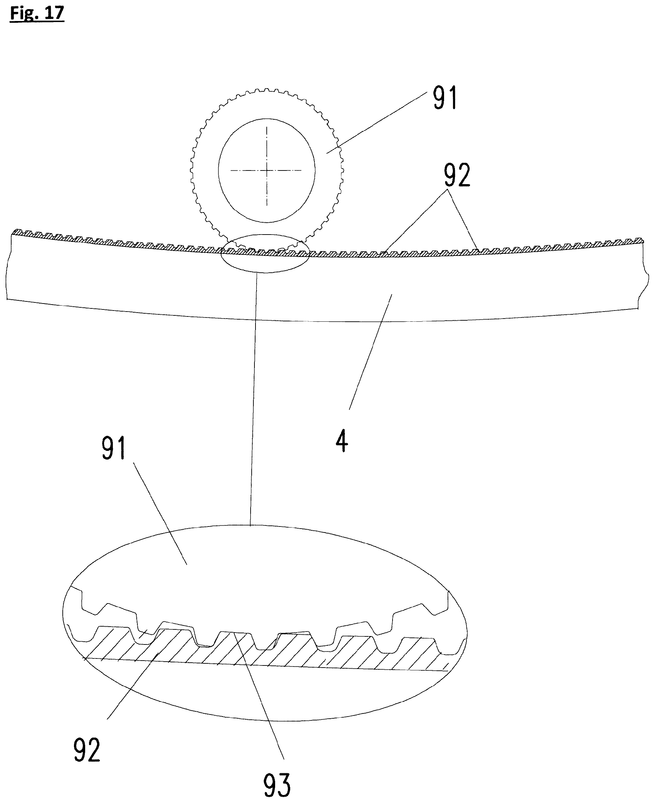

Es hat sich im Laufe der Praxisanwendung dieser Erfindung gezeigt, dass bei bestimmten Bedingungen die Lauf- bzw. Antriebsräder der erfindungsgemäßen Vorrichtung durchdrehen oder rutschen können. Dies ist insbesondere bei Vereisung, Feuchtigkeit/Nässe oder Verschmutzung der Anlage durch Umwelteinflüsse oder austretende Schmiermittel der Fall. In einer weiteren Ausführungsform der Erfindung (Fig. 17) sind daher die Laufflächen zumindest einiger der beteiligten Räder und Laufschienen entweder mit einem steifen Kunststoff mit geringem temperaturabhängigen Ausdehnungskoeffizienten beschichtet, oder aber weisen ein mit Nocken versehenes Verzahnungsprofil bzw. Zahnriemenprofil (91)(92) mit vorzugsweise flacher Aufstandsfläche (93) auf. Das Verzahnungsprofil kann selbst aus einem entsprechend geeigneten Kunststoff gefertigt sein, mit dem die Räder/Rollen und die Laufschienen beschichtet sind, oder aber selbst als Oberflächenstruktur herausgearbeitet sein. Ein solches Profil hat gegenüber üblichen Verzahnungen den Vorteil, dass aufgrund der besagten flachen Aufstandsfläche verhältnismäßig große Vertikalkräfte aufgenommen werden können. Gleichzeitig sorgen die Nocken für eine reibungsschlüssige Übertragung des Drehmoments. Bei dieser Ausführungsform kann das Reibung erhöhende Profil auch nur auf einen Teil der Räder/Rollen angebracht sein, vorzugsweise ist es aber mindestens auf dem Antriebsrad (1.3) vorhanden.

Bei der in Fig. 17 gezeigten Ausführungsform rollt das Rad mit der gesamten Auflast auf der Verzahnung.

Alternativ kann ein übliches Laufrad (ohne Zahnprofil) mit einem axial angeordneten Zahnrad verbunden sein, welches wiederum auf einer neben der Laufschiene angeordneten Zahnstange, die den gleichen Radius wie die Laufschiene aufweist; abrollt.

## Patentansprüche

1. Variable an eine Störfrequenz anpassbarer Schwingungstilger einsetzbar in Windkraftanlagen oder Anlagen, Bauwerken und Maschinen mit ähnlichen Schwingungseigenschaften umfassend ein Fahrwerk (1), eine Tilger-Hauptmasse (1.1) und eine Laufvorrichtung (7), die an einer Haltekonstruktion (3) befestigt ist oder Bestandteil derselben ist, wobei die Tilger-Hauptmasse am Fahrwerk angebracht ist oder integraler Bestandteil davon ist, und die Laufvorrichtung zumindest in ihrem mittleren Bereich im Wesentlichen konkav gekrümmt und kreisförmig ist, und das Fahrwerk (1) bzw. die Tilger-Hauptmasse (1.1) auf dieser Laufvorrichtung aus einer Mittellage oder Scheitelpunktlage heraus mittels Räder oder Rollen (1.2)(1.3)(1.7)(70.1)(70.2)(70.3) (80.3)(90) oder berührungslos bewegbar und verlagerbar ist entsprechend den die Bewegungen auslösenden, in Richtung der Laufvorrichtung wirksamen Schwingungskräften, **dadurch gekennzeichnet, dass** das Fahrwerk (1) bzw. die Tilger-Hauptmasse (1.1) (30.6) mindestens ein angetriebenes, scheibenförmiges, rotationssymmetrisches Rotationsmassenbauteil (1.5)(1.6)(30.7)(30.8) mit einer Rotationsachse senkrecht zur Ebene der Kreisbahn der Laufvorrichtung aufweist, welches sich zusammen mit der Tilger-Hauptmasse bewegt, und die Rotationsrichtung im Wesentlichen der jeweiligen Richtung des bewegten Fahrwerks entlang der Laufvorrichtung entspricht, wobei das mindestens eine Rotationsmassenbauteil eine veränderbare rotierende Masse (1.6) aufweist, die in Abhängigkeit vom Durchmesser der rotierenden Masse 1% - 30% der Tilger-Hauptmasse entspricht.

2. Schwingungstilger nach Anspruch 1, **dadurch gekennzeichnet, dass** das Fahrwerk (1) bzw. die Tilger-Hauptmasse (1.1)(30.6) auf mindestens zwei Laufrädern oder Laufrollen (1.2) oder magnetisch auf der gekrümmten Laufvorrichtung hin und her bewegt werden kann.

3. Schwingungstilger nach Anspruch 2, **dadurch gekennzeichnet, dass** das Fahrwerk (1) bzw. die Tilger-Hauptmasse (1.1)(30.6) auf zwei Laufrädern oder Laufrollen (1.2) auf mindestens einer Laufschiene (4) oder auf mindestens einem Laufrohr (70) bewegbar sind.

4. Schwingungstilger nach einem der Ansprüche 1 - 3, **dadurch gekennzeichnet, dass** das Rotationsmassenbauteil im Wesentlichen aus einem Schwungrad (1.5)(10.3) mit Antriebsachse oder Welle und einer oder mehreren Massenscheiben (1.6) besteht, welche auf die Achse oder Welle des Schwungrades aufgeschoben werden können.

5. Schwingungstilger nach Anspruch 4, **dadurch gekennzeichnet, dass** er eine Vorrichtung (10.4) aufweist, die es ermöglicht, den Durchmesser der Massenscheiben (1.6) zu verändern, oder den Massenschwerpunkt der rotierenden Masse radial zu verändern, oder dass Massenscheiben (1.6) mit unterschiedlichem Durchmesser eingesetzt werden, oder dass die Massenscheiben radial nach außen und innen verschiebbar sind.

6. Schwingungstilger nach einem der Ansprüche 1 -5, **dadurch gekennzeichnet, dass** das Rotationsmassenbauteil (1.5)(1.6)(30.7)(30.8) über mindestens ein Antriebsrad (1.3) angetrieben wird.

7. Schwingungstilger nach Anspruch 6, **dadurch gekennzeichnet, dass** das Antriebsrad (1.3) auf einer Laufschiene (4) oder einem Laufrohr (70) der Laufvorrichtung läuft.

8. Schwingungstilger nach Anspruch 6 oder 7, **dadurch gekennzeichnet, dass** Antriebsrad (1.3) eine gleiche, höhere oder niedrigere Drehzahl und / oder einen gleichen oder größeren Durchmesser aufweist als die Laufräder (1.2), und / oder dass zwischen Antriebsrad (1.3) und Rotationsmasseneinheit (1.5)(1.6)(30.7)(30.8) eine Getriebe verbaut ist, so dass die Drehzahl der Rotationsmasseneinheit größer ist als die des Antriebrades.

9. Schwingungstilger nach einem der Ansprüche 1 -8, **dadurch gekennzeichnet, dass** die Laufvorrichtung (7) mindestens eine entsprechend geformte Laufschiene (4) aufweist, und die Laufschiene und die Lauffläche mindestens eines der Laufräder oder Laufrollen (1.2)(1.3)(1.7)(70.1)(70.2)(70.3) (80.3)(90) eine die Reibkräfte steigernde Beschichtung, Auflage oder Oberflächenstruktur aufweist.

10. Schwingungstilger nach einem der Ansprüche 1 - 9, **dadurch gekennzeichnet, dass** er eine zusätzliche Vorrichtung zur Dämpfung von Schwingungen aufweist.

11. Schwingungstilger nach Anspruch 10, **dadurch gekennzeichnet, dass** die zusätzliche Vorrichtung ein Wirbelstromdämpfer ist, der im Rotationsmassenbauteil und / oder im Bereich der Laufräder oder Laufrollen in Verbindung mit mindestens einer Laufschiene (4) untergebracht und wirksam ist.

12. Schwingungstilger nach Anspruch 11, **dadurch gekennzeichnet, dass** der Wirbelstromdämpfer (40) im Rotationsmassenbauteil untergebracht ist und eine aus Permanentmagneten bestehenden Magnetanordnung (40.2) und eine elektrische Leiterscheibe (40.3) umfasst, wobei Leiterscheibe und Magnetanordnung gegenüberliegend durch einen mittels einer Einstellvorrichtung (40.4) verstellbaren Luftspalt getrennt, so angeordnet und befestigt sind, dass sie durch Drehung des Schwungrades (1.5) bzw. der Rotationsmasse (1.6)(30.7)(30.8) relativ zueinander bewegbar sind.

13. Schwingungstilger nach einem der Ansprüche 1 - 12, **dadurch gekennzeichnet, dass** er eine Laufvorrichtung (7) aus zwei zur Bewegungsrichtung parallel geführten gleich oder unterschiedlich gekrümmten Laufschienen (4), zwei hintereinander angeordneten freilaufenden Laufrädern (1.2), die auf der ersten Laufschiene (4) laufen, und ein Antriebsrad (1.3) aufweist, welches auf der zweiten Laufschiene (4) gegenüber den beiden freien Laufrädern angeordnet ist und mit einem nach außenweisenden Schwungrad (1.5) mit mindestens einer Massenscheibe (1.6) verbunden ist, wobei Antriebsrad und Laufräder ebenso wie Tilger-Hauptmasse Bestandteile des Fahrwerks (1) sind.

14. Schwingungstilger nach einem der Ansprüche 1 - 12, **dadurch gekennzeichnet, dass** er umfasst:
(i) eine Laufvorrichtung aus einem runden Rohr (70),
(ii) zwei hintereinander angeordnete Antriebsräder (70.1), welche jeweils ein Rotationsmassenbauteil (1.5)(1.6) antreiben,
(iii) zwei weitere hintereinander angeordnete Laufräder (70.2), die gegenüber den Antriebsrädern (70.1) angeordnet sind, sowie
(iv) mindestens zwei gegenüberliegende, stützende Querräder, die senkrecht zur Ebene der Antriebsräder angeordnet sind,
wobei alle Räder und eine entsprechend der Rohrkrümmung konkav geformte Lauffläche aufweisen, mittels der sie auf dem Rohr hin und her bewegt werden können, und wobei die Räder und ihre Lager gegeneinander durch entsprechende Spannmittel verspannt sind, so dass eine funktionell einwandfreie Bewegung des Fahrwerks (1) auf dem Rohr inklusive der Tilger-Hauptmasse (1.1) gewährleistet ist.

15. Schwingungstilgeranordnung zur Dämpfung von Anregungsschwingungen aus zwei oder mehr unterschiedlichen Richtungen umfassend zwei oder mehrere Schwingungstilger nach einem der Ansprüche 1 - 14, wobei mindestens zwei Schwingungstilger bezüglich der Ausrichtung ihrer Laufvorrichtung in unterschiedlichen Richtungen positioniert sind.

16. Schwingungstilgeranordnung nach Anspruch 15, **dadurch gekennzeichnet, dass** die einzelnen unterschiedlich angeordneten Schwingungstilger unterschiedliche Tilgermassen (1.1)(1.6) und/oder unterschiedliche Krümmungsradien der Laufvorrichtung (7) aufweisen.

17. Windkraftanlage umfassend mindestens einen Schwingungstilger oder einer Anordnung von Schwingungstilgern gemäß einem der Ansprüche 1 -16.

## Claims

1. Vibration absorber which can be matched variably to an interfering frequency and which can be employed in wind turbines or installations, buildings and machines having similar vibration properties, comprising a running gear (1), an absorber main mass (1.1) and a running device (7), which is attached to a retention construction (3) or is part thereof, where the absorber main mass is mounted on the running gear or is an integral part thereof, and the running device is essentially curved in a concave manner and circular, at least in its central region, and the running gear (1) or the absorber main mass (1.1) can be moved and displaced out of a central position or vertex position on this running device by means of wheels or rollers (1.2)(1.3)(1.7)(70.1)(70.2)(70.3)or in a non-contact manner in accordance with the vibration forces initiating the movements and effective in the direction of the running device, **characterised in that** the running gear (1) or the absorber main mass (1.1) (30.6) has at least one driven, disc-shaped, rotationally symmetrical rotation mass component (1.5)(1.6)(30.7)(30.8) having an axis of rotation perpendicular to the plane of the circular track of the running device, which moves together with the absorber main mass, and the direction of rotation essentially corresponds to the respective direction of the moved running gear along the running device, where the at least one rotation mass component has a variable rotating mass (1.6) which corresponds to 1% - 30% of the absorber main mass, depending on the diameter of the rotating mass.

2. Vibration absorber according to Claim 1, **characterised in that** the running gear (1) or the absorber main mass (1.1)(30.6) can be moved to and fro on at least two running wheels or running rollers (1.2) or magnetically on the curved running device.

3. Vibration absorber according to Claim 2, **characterised in that** the running gear (1) or the absorber main mass (1.1)(30.6) can be moved on two running wheels or running rollers (1.2) on at least one running rail (4) or on at least one running tube (70).

4. Vibration absorber according to one of Claims 1 - 3, **characterised in that** the rotation mass component essentially consists of a flywheel (1.5)(10.3) having a drive axle or shaft and one or more mass discs (1.6), which can be pushed onto the axis or shaft of the flywheel.

5. Vibration absorber according to Claim 4, **characterised in that** it has a device (10.4) which enables the diameter of the mass discs (1.6) to be changed, or the mass centre of gravity of the rotating mass to be changed radially, or **in that** mass discs (1.6) of different diameter are employed, or **in that** the mass discs can be displaced radially outwards and inwards.

6. Vibration absorber according to one of Claims 1 - 5, **characterised in that** the rotation mass component (1.5)(1.6)(30.7)(30.8) is driven via at least one drive wheel (1.3).

7. Vibration absorber according to Claim 6, **characterised in that** the drive wheel (1.3) runs on a running rail (4) or a running tube (70) of the running device.

8. Vibration absorber according to Claim 6 or 7, **characterised in that** drive wheel (1.3) has an identical, higher or lower speed of rotation and/or an identical or greater diameter than the running wheels (1.2), and/or **in that** a gearbox is installed between drive wheel (1.3) and rotation mass unit (1.5)(1.6)(30.7)(30.8), so that the speed of rotation of the rotation mass unit is greater than that of the drive wheel.

9. Vibration absorber according to one of Claims 1 - 8, **characterised in that** the running device (7) has at least one correspondingly shaped running rail (4), and the running rail and the running surface of at least one of the running wheels or running rollers (1.2)(1.3)(1.7)(70.1)(70.2)(70.3) (80.3)(90) has a coating, covering or surface structure which increases the frictional forces.

10. Vibration absorber according to one of Claims 1 - 9, **characterised in that** it has an additional device for damping vibrations.

11. Vibration absorber according to Claim 10, **characterised in that** the additional device is an Eddy current damper, which is accommodated and effective in the rotation mass component and/or in the region of the running wheels or running rollers in combination with at least one running rail (4).

12. Vibration absorber according to Claim 11, **characterised in that** the Eddy current damper (40) is accommodated in the rotation mass component and comprises a magnet arrangement (40.2) consisting of permanent magnets and an electrical conductor disc (40.3), where conductor disc and magnet arrangement are arranged and fixed opposite one another, separated by an air gap which can be adjusted by means of an adjustment device (40.4), in such a way that they can be moved relative to one another by rotation of the flywheel (1.5) or the rotation mass (1.6)(30.7)(30.8).

13. Vibration absorber according to one of Claims 1 - 12, **characterised in that** it has a running device (7) comprising two identically or differently curved running rails (4) run in parallel to the direction of movement, two free-running running wheels (1.2) arranged one behind the other, which run on the first running rail (4), and a drive wheel (1.3), which is arranged on the second running rail (4) opposite the two free running wheels and is connected to an outward-facing flywheel (1.5) having at least one mass disc (1.6), where drive wheel and running wheels as well as absorber main mass are parts of the running gear (1).

14. Vibration absorber according to one of Claims 1 - 12, **characterised in that** it comprises:
(i) a running device comprising a round tube (70),
(ii) two drive wheels (70.1) arranged one behind the other, which each drive a rotation mass component (1.5)(1.6),
(iii) two further running wheels (70.2) arranged one behind the other, which are arranged opposite the drive wheels (70.1), and
(iv) at least two opposite, supporting transverse wheels, which are arranged perpendicular to the plane of the drive wheels,
where all wheels and have a running surface shaped in a concave manner in accordance with the tube curvature, by means of which they can be moved to and fro on the tube, and where the wheels and their bearings are tensioned against one another by corresponding tensioning means, so that functionally perfect movement of the running gear (1) on the tube, including the absorber main mass (1.1), is ensured.

15. Vibration absorber arrangement for damping excitation vibrations from two or more different directions comprising two or more vibration dampers according to one of Claims 1 - 14, where at least two vibration dampers are positioned in different directions with respect to the alignment of their running device.

16. Vibration absorber arrangement according to Claim 15, **characterised in that** the individual differently arranged vibration absorbers have different absorber masses (1.1)(1.6) and/or different radii of curvature of the running device (7).

17. Wind turbine having at least one vibration absorber or an arrangement of vibration absorbers according to one of Claims 1 - 16.

## Revendications

1. Absorbeur de vibrations qui peut être mis en correspondance de façon variable vis-à-vis d'une fréquence d'interférence et qui peut être utilisé dans des éoliennes ou des installations, des bâtiments et des machines qui présentent des propriétés de vibrations similaires, comprenant un organe de roulement (1), une masse principale d'absorbeur (1.1) et un dispositif de roulement (7), lequel est fixé à une construction de retenue (3) ou en constitue une partie, dans lequel la masse principale d'absorbeur est montée sur l'organe de roulement ou en constitue une partie intégrante, et le dispositif de roulement est de façon essentielle incurvé d'une manière concave et circulaire, au moins au niveau de sa région centrale, et l'organe de roulement (1) ou la masse principale d'absorbeur (1.1) peut être mis(e) en mouvement et déplacé(e) hors d'une position centrale ou position de vertex sur ce dispositif de roulement au moyen de roues ou de rouleaux (1.2)(1.3)(1.7)(70.1)(70.2)(70.3) ou d'une manière sans contact en fonction des forces de vibration qui initient les mouvements et qui sont effectives dans la direction du dispositif de roulement, **caractérisé en ce que** l'organe de roulement (1) ou la masse principale d'absorbeur (1.1) (30.6) comporte au moins un composant de masse de rotation symétrique en rotation, en forme de disque et entraîné (1.5)(1.6)(30.7)(30.8) qui comporte un axe de rotation qui est perpendiculaire au plan de la piste circulaire du dispositif de roulement, lequel est mis en mouvement en association avec la masse principale d'absorbeur, et le sens de rotation correspond de façon essentielle au sens respectif de l'organe de roulement mis en mouvement de façon conjointe avec le dispositif de roulement, dans lequel l'au moins un composant de masse de rotation présente une masse rotative variable (1.6) qui correspond à 1% - 30% de la masse principale d'absorbeur, en fonction du diamètre de la masse rotative.

2. Absorbeur de vibrations selon la revendication 1, **caractérisé en ce que** l'organe de roulement (1) ou la masse principale d'absorbeur (1.1)(30.6) peut être mis(e) en mouvement en va-et-vient sur au moins deux roues de roulement ou rouleaux de roulement (1.2) ou de façon magnétique sur le dispositif de roulement incurvé.

3. Absorbeur de vibrations selon la revendication 2, **caractérisé en ce que** l'organe de roulement (1) ou la masse principale d'absorbeur (1.1)(30.6) peut être mis(e) en mouvement sur deux roues de roulement ou rouleaux de roulement (1.2) sur au moins un rail de roulement (4) ou sur au moins un tube de roulement (70).

4. Absorbeur de vibrations selon l'une des revendications 1 à 3, **caractérisé en ce que** le composant de masse de rotation est constitué de façon essentielle par un volant d'inertie (1.5)(10.3) qui comporte un axe ou arbre d'entraînement et un ou plusieurs disque(s) de masse (1.6), lesquels disques de masse peuvent être poussés sur l'axe ou l'arbre du volant d'inertie.

5. Absorbeur de vibrations selon la revendication 4, **caractérisé en ce qu'**il comporte un dispositif (10.4) qui permet de modifier le diamètre des disques de masse (1.6), ou de modifier radialement le centre de gravité en termes de masse de la masse rotative, ou **en ce que** des disques de masse (1.6) de diamètres différents sont utilisés, ou **en ce que** les disques de masse peuvent être déplacés radialement vers l'extérieur et vers l'intérieur.

6. Absorbeur de vibrations selon l'une des revendications 1 - 5, **caractérisé en ce que** le composant de masse de rotation (1.5)(1.6)(30.7)(30.8) est entraîné via au moins une roue d'entraînement (1.3).

7. Absorbeur de vibrations selon la revendication 6, **caractérisé en ce que** la roue d'entraînement (1.3) roule sur un rail de roulement (4) ou un tube de roulement (70) du dispositif de roulement.

8. Absorbeur de vibrations selon la revendication 6 ou 7, **caractérisé en ce que** la roue d'entraînement (1.3) présente une vitesse de rotation identique, plus élevée ou plus faible et/ou un diamètre identique ou plus grand par comparaison avec les roues de roulement (1.2), et/ou **en ce qu'**une boîte de vitesses est installée entre la roue d'entraînement (1.3) et l'unité de masse de rotation (1.5)(1.6)(30.7)(30.8), de telle sorte que la vitesse de rotation de l'unité de masse de rotation soit plus importante que celle de la roue d'entraînement.

9. Absorbeur de vibrations selon l'une des revendications 1 à 8, **caractérisé en ce que** le dispositif de roulement (7) comporte au moins un rail de roulement conformé en correspondance (4), et le rail de roulement et la surface de roulement d'au moins l'un(e) des roues de roulement ou des rouleaux de roulement (1.2)(1.3)(1.7)(70.1)(70.2)(70.3) (80.3)(90) comporte une structure de revêtement, de recouvrement ou de surface qui augmente les forces de friction.

10. Absorbeur de vibrations selon l'une des revendications 1 à 9, **caractérisé en ce qu'**il comporte un dispositif additionnel pour amortir les vibrations.

11. Absorbeur de vibrations selon la revendication 10, **caractérisé en ce que** le dispositif additionnel est un amortisseur à courants de Foucault, lequel est logé et effectif à l'intérieur du composant de masse de rotation et/ou à l'intérieur de la région des roues de roulement ou des rouleaux de roulement en combinaison avec au moins un rail de roulement (4).

12. Absorbeur de vibrations selon la revendication 11, **caractérisé en ce que** l'amortisseur à courants de Foucault (40) est logé à l'intérieur du composant de masse de rotation et il comprend un agencement d'aimants (40.2) qui est constitué par des aimants permanents et un disque conducteur électrique (40.3), dans lequel le disque conducteur électrique et l'agencement d'aimants sont agencés et fixés à l'opposé l'un de l'autre, en étant séparés par un espace d'air à fonction d'entrefer qui peut être réglé au moyen d'un dispositif de réglage (40.4), de telle sorte qu'ils puissent être mis en mouvement l'un par rapport à l'autre par rotation du volant d'inertie (1.5) ou de la masse de rotation (1.6)(30.7)(30.8).

13. Absorbeur de vibrations selon l'une des revendications 1 à 12, **caractérisé en ce qu'**il comporte un dispositif de roulement (7) qui comprend deux rails de roulement incurvés de manière identique ou de façon différente (4) qui courent en parallèle à la direction de mouvement, deux roues de roulement à roulement libre (1.2) qui sont agencées l'une derrière l'autre, lesquelles roues roulent sur le premier rail de roulement (4), et une roue d'entraînement (1.3), laquelle roue est agencée sur le second rail de roulement (4) de telle sorte qu'elle soit opposée aux deux roues de roulement à roulement libre et qu'elle soit connectée à un volant d'inertie orienté vers l'extérieur (1.5) qui comporte au moins un disque de masse (1.6), dans lequel la roue d'entraînement et les roues de roulement de même que la masse principale d'absorbeur constituent des parties de l'organe de roulement (1).

14. Absorbeur de vibrations selon l'une des revendications 1 à 12, **caractérisé en ce qu'**il comprend :
(i) un dispositif de roulement qui comprend un tube rond (70) ;
(ii) deux roues d'entraînement (70.1) qui sont agencées l'une derrière l'autre, dont chacune entraîne un composant de masse de rotation (1.5)(1.6) ;
(iii) deux roues de roulement supplémentaires (70.2) qui sont agencées l'une derrière l'autre, lesquelles roues sont agencées à l'opposé des roues d'entraînement (70.1) ; et
(iv) au moins deux roues transversales de support opposées, lesquelles roues sont agencées perpendiculairement au plan des roues d'entraînement ;
dans lequel toutes les roues comportent une surface de roulement qui est conformée d'une manière concave conformément à la courbure de tube, surfaces au moyen desquelles les roues peuvent être mises en mouvement en va-et-vient sur le tube, et dans lequel les roues et leurs paliers sont mis sous tension les uns contre les autres à l'aide de moyens de tension correspondants, de telle sorte qu'un mouvement fonctionnellement parfait de l'organe de roulement (1) sur le tube, y compris la masse principale d'absorbeur (1.1), soit assuré.

15. Agencement d'absorbeurs de vibration pour amortir des vibrations d'excitation en provenance de deux directions différentes ou plus, comprenant deux amortisseurs de vibrations ou plus selon l'une des revendications 1 à 14, dans lequel au moins deux amortisseurs de vibrations sont positionnés dans des directions différentes par rapport à l'alignement de leur dispositif de roulement.

16. Agencement d'absorbeurs de vibrations selon la revendication 15, **caractérisé en ce que** les absorbeurs de vibrations individuels agencés différemment présentent des masses d'absorbeur différentes (1.1)(1.6) et/ou des rayons de courbure différents du dispositif de roulement (7).

17. Éolienne comportant au moins un absorbeur de vibrations ou un agencement d'absorbeurs de vibrations selon l'une des revendications 1 à 16.
